# EUROPÄISCHE PATENTSCHRIFT

(11) **EP 4 504 629 B1**
(45) Veröffentlichungstag und Bekanntmachung des Hinweises auf die Patenterteilung: **15.10.2025**
(21) Anmeldenummer: 23724306.8
(22) Anmeldetag: 09.05.2023
(51) Int. Cl.: B65G 54/02

(54) **VERFAHREN ZUM STEUERN EINES PLANARANTRIEBSSYSTEMS, LÄUFER, STATOREINHEIT UND PLANARANTRIEBSSYSTEM**
METHOD FOR CONTROLLING A PLANAR DRIVE SYSTEM, ROTOR, STATOR UNIT, AND PLANAR DRIVE SYSTEM
PROCÉDÉ POUR COMMANDER UN SYSTÈME D'ENTRAÎNEMENT PLANAIRE, ROTOR, UNITÉ STATOR ET SYSTÈME D'ENTRAÎNEMENT PLANAIRE

(30) Priorität: 11.05.2022 DE 102022111832
(43) Veröffentlichungstag der Anmeldung: 12.02.2025
(73) Patentinhaber: Beckhoff Automation GmbH, 33415 Verl (DE)
(72) Erfinder: BENTFELD, Lukas, 33129 Delbrück (DE); BECKHOFF, Johannes, 33758 Schloß Holte-Stukenbrock (DE); SCHULTE, Felix, 33397 Rietberg (DE); PRÜSSMEIER, Uwe, 32657 Lemgo (DE)
(74) Vertreter: Patentanwaltskanzlei WILHELM & BECK
(86) Internationale Anmeldenummer: PCT/EP2023/062241
(87) Internationale Veröffentlichungsnummer: WO 2023/217763

(56) Entgegenhaltungen:
- EP-A1- 3 656 707
- EP-A1- 3 916 994
- DE-A1- 102009 008 529
- DE-A1- 102020 107 783
- US-B2- 11 196 329

## Beschreibung

Die Erfindung betrifft ein Verfahren zum Steuern eines Planarantriebssystems, einen Läufer und eine Statoreinheit eines Planarantriebssystems und ein Planarantriebssystem, das eingerichtet ist, das Verfahren zum Steuern eines Planarantriebssystems auszuführen. Diese Patentanmeldung beansprucht die Priorität der DE 10 2022 111 832.0 vom 11. Mai 2022.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird eine Antriebskraft auf den Läufer ausgeübt, indem eine magnetische Kopplung zwischen einem Magnetfeld des Läufers und einem Magnetfeld einer Statoreinheit bewirkt wird. Das Magnetfeld des Läufers kann hierbei über am Läufer angeordnete Permanentmagnete erzeugt werden. Das Magnetfeld der Statoreinheit kann hingegen durch ein Bestromen einer Mehrzahl von Statorspulen bewirkt werden. Über eine entsprechende Ansteuerung der Bestromung der verschiedenen Statorspulen ist über die magnetische Kopplung mit dem Magnetfeld des Läufers ein Antrieb des Läufers ermöglicht. Indem sowohl das Magnetfeld des Läufers als auch die steuerbaren Magnetfelder der Statoreinheit Komponenten aufweisen, die parallel zu einer Oberfläche der Statoreinheit orientiert sind, ist der Läufer in beliebige Richtungen parallel zur Oberfläche der Statoreinheit bewegbar. Über eine Kopplung von senkrecht zur Oberfläche der Statoreinheit orientierten Komponenten der Magnetfelder des Läufers und der Statoreinheit kann der Läufer in einen Schwebungszustand oberhalb der Oberfläche der Statoreinheit gebracht beziehungsweise in diesem gehalten werden.

Für derartige planare Antriebssysteme, die primär für den Transport von zu transportierenden Gütern dienen, kann es vorteilhaft sein, während des Transports der Güter unmittelbar auf dem jeweiligen Läufer das jeweilige Gut betreffende Prozesse durchzuführen. Diese Prozesse können beispielsweise ein Umorientieren des zu transportierenden Guts auf dem Läufer oder ein Verarbeiten des jeweils zu transportierenden Guts umfassen.

Aus der Druckschrift WO 2022/079070 A1 sind ein Verfahren zum Steuern eines Planarantriebssystems und ein Planarantriebssystem bekannt.

Die Druckschrift DE 10 2009 008 529 A1 betrifft ein elektromagnetisches Fördersystem und -verfahren gemäss dem Oberbegriff von Anspruch 1.

Die Druckschrift EP 3 656 707 A1 betrifft ein Verfahren zum Handhaben von Behältern in einem System zur Herstellung von abgepackten Nahrungsmittelprodukten und offenbart den Oberbegriff von Anspruch 8. Die Druckschrift EP 3 916 994 A1 betrifft ein Planarantriebssystem und ein Verfahren zum Betreiben eines Planarantriebssystems und offenbart den Oberbegriff des Anspruchs 9.

Es ist daher eine Aufgabe der Erfindung, ein verbessertes Verfahren zum Steuern eines Planarantriebssystems bereitzustellen, einen Läufer, eine Statoreinheit und ein Planarantriebssystem bereitzustellen, das eingerichtet ist, das erfindungsgemäße Verfahren auszuführen.

Die Aufgabe wird durch ein Verfahren zum Steuern eines Planarantriebssystems, einen Läufer, eine Statoreinheit und ein Planarantriebssystem gemäß den unabhängigen Ansprüchen gelöst. Bevorzugte Ausführungsformen sind in den abhängigen Ansprüchen angegeben.

Nach einem Aspekt der Erfindung wird ein Verfahren zum Steuern eines Planarantriebssystems bereitgestellt, wobei das Planarantriebssystem eine Hauptsteuereinheit zum Steuern des Planarantriebssystems, eine Statoreinheit mit einer Mehrzahl von Statorspulen zum Erzeugen eines Statormagnetfelds und wenigstens einen Läufer mit einer Mehrzahl von Magneteinheiten zum Erzeugen eines Läufermagnetfelds umfasst, wobei über eine magnetische Kopplung zwischen dem Statormagnetfeld und dem Läufermagnetfeld der Läufer auf der Statoreinheit antreibbar ist, wobei am Läufer eine Untersteuereinheit zum Steuern eines durch den Läufer ausführbaren Automatisierungsprozesses ausgebildet ist, wobei das Planarantriebssystem ferner ein Kommunikationssystem für eine drahtlose Datenkommunikation zwischen der Hauptsteuereinheit und der Untersteuereinheit des Läufers umfasst, und wobei das Verfahren umfasst:
Aussenden einer Kommunikationsnachricht durch die Hauptsteuereinheit an die Untersteuereinheit über das Kommunikationssystem in einem Sendeschritt, wobei die Kommunikationsnachricht einen Startbefehl zum Starten des durch den Läufer auszuführenden Automatisierungsprozess umfasst und eingerichtet ist, die Untersteuereinheit zum Steuern des Automatisierungsprozesses anzutreiben; und
Empfangen einer durch die Untersteuereinheit an die Hauptsteuereinheit über das Kommunikationssystem ausgesendeten Antwortnachricht in einem Empfangsschritt, wobei die Antwortnachricht eine Zustandsangabe über einen Zustand des durch die Untersteuereinheit gesteuerten Automatisierungsprozesses umfasst.

Hierdurch kann der technische Vorteil erreicht werden, dass ein verbessertes Verfahren zum Steuern eines Planarantriebssystems bereitgestellt werden kann. Hierzu ist wenigstens ein Läufer des Planarantriebssystems mit einer Untersteuereinheit versehen, die eingerichtet ist, einen auf dem Läufer bzw. durch den Läufer ausführbaren Automatisierungsprozess zu steuern. Das Planarantriebssystem weist ferner eine Hauptsteuereinheit auf, die eingerichtet ist, das gesamte Planarantriebssystem inklusive des Antreibens des wenigstens einen Läufers über eine entsprechende Ansteuerung der Statoreinheit des Planarantriebssystems zu steuern. Die Hauptsteuereinheit ist ferner eingerichtet, über ein Kommunikationssystem des Planarantriebssystems die Untersteuereinheit zu veranlassen, den durch die Untersteuereinheit des Läufers steuerbaren Automatisierungsprozess zu starten und diesen entsprechend zu steuern.

Die Untersteuereinheit ist hierbei eingerichtet, den Automatisierungsprozess unabhängig von der Hauptsteuereinheit zu steuern. Die unabhängige Steuerung des Automatisierungsprozesses durch die Untersteuereinheit beschreibt hierbei, dass die Hauptsteuereinheit lediglich eingerichtet ist, mit einer entsprechenden Kommunikationsnachricht und einem in dieser enthaltenen Startbefehl die Untersteuereinheit dazu zu veranlassen, die Ausführung des Automatisierungsprozesses zu beginnen. Die Hauptsteuereinheit ist jedoch nicht eingerichtet, in die Ausführung des Automatisierungsprozesses einzugreifen bzw. ohne die Untersteuereinheit den Automatisierungsprozess zu starten bzw. zu beenden. Die Untersteuereinheit ist hingegen eingerichtet, nach Empfang des Startbefehls den Automatisierungsprozess selbständig zu starten, diesen zu steuern und gegebenenfalls bei Erreichen des zu erzielenden Prozessziels den Automatisierungsprozess zu beenden oder diesen zu unterbrechen, falls eine Fehlfunktion zu beobachten ist bzw. erkennbar wird, dass das zu erreichende Ziel des Automatisierungsprozesses nicht erreicht werden kann.

Die Untersteuereinheit des Läufers ist ferner eingerichtet, über das Kommunikationssystem eine Antwortnachricht an die Hauptsteuereinheit auszusenden, wobei die Antwortnachricht eine Zustandsinformation bezüglich eines Zustands des durch die Untersteuereinheit gesteuerten Automatisierungsprozesses umfasst. Durch Ausgeben der Antwortnachricht kann der durch die Untersteuereinheit gesteuerte Automatisierungsprozess des Läufers in die Steuerung des gesamten Planarantriebssystems durch die Hauptsteuereinheit eingebunden werden. Die Zustandsinformation kann hierzu Prozessdaten des Automatisierungsprozesses bzw. Start-, Stopp- oder Unterbrechungsinformationen des durch die Untersteuereinheit gesteuerten Automatisierungsprozesses umfassen. Die Zustandsinformation des Automatisierungsprozesses kann durch die Hauptsteuereinheit in die Steuerung des Planarantriebssystems eingebunden werden, indem weitere durch das Planarantriebssystem ausgeführte Prozesse unter Berücksichtigung der Zustandsinformation des durch den Läufer ausgeführten Automatisierungsprozesses angesteuert werden.

Hierdurch kann der technische Vorteil erreicht werden, dass einzelne Teilprozesse des durch das gesamte Planarantriebssystem auszuführenden Hauptprozesses auf verschiedene Läufer dezentral ausgelagert werden können.

Durch die Steuerung des Automatisierungsprozesses des Läufers durch die auf dem Läufer ausgebildete Untersteuereinheit kann die Steuerung des gesamten Planarantriebssystems durch die Hauptsteuerung vereinfacht werden, indem Steuerprozesse, die zum Steuern des auf dem Läufer auszuführenden Automatisierungsprozesses benötigt werden, ausschließlich durch die Untersteuereinheit ausgeführt werden. Die Hauptsteuereinheit muss diese Steuerprozesse somit nicht ausführen.

Ferner kann erreicht werden, dass eine Verringerung des Datenvolumens einer Datenkommunikation zwischen der Hauptsteuereinheit und einer die Ausführung des Automatisierungsprozesses bewirkenden Prozessvorrichtung verringert werden kann. Zur Steuerung des Automatisierungsprozesses ist lediglich eine Datenkommunikation zwischen der Untersteuereinheit und der den Automatisierungsprozess ausführenden Prozessvorrichtung notwendig. Ist diese Prozessvorrichtung ebenfalls auf dem Läufer ausgebildet, so kann die zur Steuerung des Automatisierungsprozesses benötigte Datenkommunikation ebenfalls ausschließlich auf dem Läufer bewirkt werden.

Die Datenkommunikation zwischen dem Läufer und der Hauptsteuereinheit kann hierbei auf das Aussenden der Antwortnachricht inklusive der darin enthaltenen Zustandsinformation durch die Untersteuereinheit an die Hauptsteuereinheit reduziert werden. Die Datenkommunikation zwischen der Hauptsteuereinheit und dem Läufer beschreibt im Sinne der Anmeldung insbesondere eine Datenkommunikation zischen der Hauptsteuereinheit und der auf dem Läufer ausgebildeten Untersteuereinheit.

Das reduzierte Datenvolumen der Datenkommunikation zwischen der Hauptsteuereinheit und dem Läufer bzw. der auf dem Läufer ausgebildeten Untersteuereinheit ermöglicht eine verbesserte und beschleunigte Steuerung des Planarantriebssystems, indem die hierdurch eingesparte Bandbreite der Datenkommunikation innerhalb des Planarantriebssystems für andere Funktionalitäten des Planarantriebssystems genutzt werden kann.

Erfindungsgemäß umfasst das Kommunikationssystem eine Mehrzahl von verteilt an der Statoreinheit angeordneten Kommunikationseinheiten und verteilt am Läufer angeordneten Läuferkommunikationseinheiten, wobei der durch die Hauptsteuereinheit ausgeführte Sendeschritt umfasst:
Ermitteln wenigstens einer zu einer Position des Läufers an der Statoreinheit benachbart angeordneten Kommunikationseinheit in einem Ermittlungsschritt; und
Ansteuern der zur Position des Läufers benachbarten Kommunikationseinheit zum Aussenden der Kommunikationsnachricht in einem Ansteuerungsschritt.

Hierdurch kann der technische Vorteil erreicht werden, dass eine präzise Datenkommunikation zwischen der Hauptsteuereinheit des Planarantriebssystems und der auf dem Läufer ausgebildeten Untersteuereinheit ermöglicht ist. Zur Steuerung des Läufers ist der Hauptsteuereinheit zu jedem Zeitpunkt eine Position des Läufers auf der Statoreinheit bekannt. Hierzu weist das Planarantriebssystem eine Mehrzahl von in der Statoreinheit ausgebildeten Magnetfeldsensoren auf, über die das Läufermagnetfeld des Läufers detektierbar und hierüber die Position des Läufers auf der Statoreinheit bestimmbar ist.

Bei bekannter Position des Läufers können somit zum Aussenden der Informationsnachricht durch die Hauptsteuereinheit an die Untersteuereinheit ausschließlich die Kommunikationseinheiten ausgewählt werden, die in der Statoreinheit benachbart zur Position des Läufers angeordnet sind. Zur Position des Läufers benachbarte Kommunikationseinheiten können erfindungsgemäß dadurch gekennzeichnet sein, dass diese einen vordefinierten maximalen Abstand zur ermittelten Position des Läufers nicht überschreiten.

Ausschließlich über die zum Läufer in der jeweiligen Position benachbart angeordneten Kommunikationseinheiten der Statoreinheit wird somit die entsprechende Kommunikationsnachricht an den Läufer ausgesendet. Hierdurch kann eine verbesserte Datenkommunikation zwischen der Hauptsteuereinheit und der Untersteuereinheit auf dem Läufer erreicht werden. Insbesondere bei einer Mehrzahl von Läufern, die durch die Hauptsteuereinheit auf der Statoreinheit angesteuert werden, kann durch die Auswahl der Kommunikationseinheiten zum Aussenden Kommunikationsnachricht erreicht werden, dass die ausgesendeten Kommunikationsnachrichten ausschließlich an die jeweils adressierten Untersteuereinheiten der Läufer ausgesendet werden. Hierdurch kann vermieden werden, dass durch die Hauptsteuereinheit Nachrichten an nicht-adressierte Untersteuereinheiten ausgesendet werden.

Nach einer Ausführungsform umfasst der durch die Hauptsteuereinheit ausgeführte Empfangsschritt:
Ermitteln wenigstens einer zur Position des Läufers am Statormodul benachbart angeordneten Kommunikationseinheit in einem weiteren Ermittlungsschritt; und
Auslesen der zur Position des Läufers benachbarten Kommunikationseinheit zum Empfangen der Antwortnachricht in einem Ausleseschritt.

Hierdurch kann der technische Vorteil erreicht werden, dass eine präzise Datenkommunikation zwischen der auf dem Läufer ausgebildeten Untersteuereinheit und der Hauptsteuereinheit des Planarantriebssystems ermöglicht ist. Hierzu werden durch die Hauptsteuereinheit wiederum nach Aussenden der Antwortnachricht durch die Untersteuereinheit des Läufers ausschließlich die Kommunikationseinheiten ausgelesen, die in der Statoreinheit benachbart zur derzeitigen Position des Läufers ausgebildet sind.

Hierdurch kann erreicht werden, dass zum Empfang der Antwortnachricht der Untersteuereinheit nicht alle in der Statoreinheit ausgebildeten Kommunikationseinheiten ausgelesen werden müssen. Insbesondere bei einer Mehrzahl von Läufern mit entsprechenden Untersteuereinheiten, die jeweils Antwortnachrichten an die Hauptsteuereinheit aussenden, ist die Auswahl der zu den jeweiligen Positionen der Läufer benachbarten Kommunikationseinheiten der Statoreinheit dahingehend vorteilhaft, dass die jeweils durch die Untersteuereinheiten der verschiedenen Läufer ausgesendeten verschiedenen Antwortnachrichten eindeutig dem jeweiligen Läufer zugeordnet werden können. Eine Fehlinterpretation der empfangenen Antwortnachrichten durch falsche Zuordnungen der Nachrichten zu den jeweiligen Untersteuereinheiten der Läufer und den auf diesen bzw. durch diese ausgeführten Automatisierungsprozesse kann somit vermieden werden.

Nach einer Ausführungsform erfolgt die Datenkommunikation zwischen der Hauptsteuereinheit und der Untersteuereinheit während eines Antreibens des Läufers von einer ersten Position zu einer zweiten Position auf der Statoreinheit, wobei der durch die Hauptsteuereinheit ausgeführte Sendeschritt umfasst:
Ermitteln wenigstens einer zur ersten Position des Läufers an der Statoreinheit benachbart angeordneten ersten Kommunikationseinheit in einem ersten Kommunikationseinheitsermittlungsschritt; und
Ansteuern der zur ersten Position des Läufers benachbarten ersten Kommunikationseinheit zum Aussenden einer ersten Kommunikationsteilnachricht in einem ersten Teilsendeschritt, wobei die erste Kommunikationsteilnachricht einen Teil der Kommunikationsnachricht darstellt; und
Ermitteln wenigstens einer zur zweiten Position des Läufers an der Statoreinheit benachbart angeordneten zweiten Kommunikationseinheit in einem zweiten Kommunikationseinheitsermittlungsschritt; und
Ansteuern der zur zweiten Position des Läufers benachbarten zweiten Kommunikationseinheit zum Aussenden einer zweiten Kommunikationsteilnachricht in einem zweiten Teilsendeschritt, wobei die zweite Kommunikationsteilnachricht einen weiteren Teil der Kommunikationsnachricht darstellt; und/oder wobei der durch die Hauptsteuereinheit ausgeführte Empfangsschritt umfasst:
   Ermitteln wenigstens einer zur ersten Position des Läufers an der Statoreinheit benachbart angeordneten ersten Kommunikationseinheit in einem weiteren ersten Kommunikationseinheitsermittlungsschritt; und
   Auslesen der zur ersten Position des Läufers benachbarten ersten Kommunikationseinheit zum Empfangen einer ersten Antwortteilnachricht in einem ersten Teilausleseschritt, wobei die erste Antwortteilnachricht einen Teil der Antwortnachricht darstellt; und Ermitteln wenigstens einer zur zweiten Position des Läufers an der Statoreinheit benachbart angeordneten zweiten Kommunikationseinheit in einem weiteren zweiten Kommunikationseinheitsermittlungsschritt; und
   Auslesen der zur zweiten Position des Läufers benachbarten zweiten Kommunikationseinheit zum Empfangen einer zweiten Antwortteilnachricht in einem zweiten Teilausleseschritt, wobei die zweite Antwortteilnachricht einen weiteren Teil der Antwortnachricht darstellt.

Hierdurch kann der technische Vorteil erreicht werden, dass eine präzise Datenkommunikation zwischen der Hauptsteuereinheit und der Untersteuereinheit während eines Verfahrens des Läufers zwischen zwei Positionen auf der Statoreinheit ermöglicht ist. Hierzu werden die auszusenden Kommunikationsnachrichten oder Antwortnachrichten in wenigstens zwei Kommunikationsteilnachrichten oder zwei Antwortteilnachrichten aufgeteilt und eine entsprechende erste Kommunikations- oder Antwortteilnachricht über zu einer ersten Position des Läufers benachbarte erste Kommunikationseinheiten übertragen und eine entsprechende zweite Kommunikations- oder Antwortteilnachricht über zu einer zweiten Position des Läufers benachbarte zweite Kommunikationseinheiten übertragen.

Hierzu wird durch die Hauptsteuereinheit zunächst eine erste Position des Läufers ermittelt und es werden erste Kommunikationseinheiten ausgewählt, die zur ersten Position des Läufers benachbart in der Statoreinheit angeordnet sind, und über die ausgewählten ersten Kommunikationseinheiten eine entsprechende erste Kommunikationsteilnachricht an die Untersteuereinheit des Läufers ausgesendet bzw. durch Auslesen der ausgewählten ersten Kommunikationseinheiten eine entsprechende erste Antwortteilnachricht empfangen.

Zu einem späteren Zeitpunkt wird die zweite Position des Läufers ermittelt und es werden entsprechende zweite Kommunikationseinheiten ausgewählt, die zur zweiten Position benachbart in der Statoreinheit angeordnet sind. Durch Ansteuern der ausgewählten zweiten Kommunikationseinheiten wird eine entsprechende zweite Teilkommunikationsteilnachricht an die Untersteuereinheit ausgesendet bzw. durch Auslesen der ausgewählten zweiten Kommunikationseinheiten eine zweite Antwortteilnachricht durch die Hauptsteuereinheit empfangen.

Die ersten und zweiten Kommunikationsteilnachrichten sind hierbei jeweils Teile der gesamten zu übertragenden Kommunikationsnachricht, während die ersten und zweiten Antwortteilnachrichten entsprechende Teile der gesamten zu übertragenden Antwortnachricht darstellen.

Hierdurch kann insbesondere erreicht werden, dass bei einer zyklischen Ansteuerung des Planarantriebssystems, bei der durch die Hauptsteuereinheit in entsprechenden Steuerzyklen die Funktionalitäten des Planarantriebssystems angesteuert werden, eine Kommunikationsnachricht durch die Hauptsteuereinheit ausgesendet bzw. eine Antwortnachricht empfangen werden kann, deren Umfang nicht vollständig in einem Steuerzyklus übertragen werden kann. Hierzu wird in einem ersten Steuerzyklus die erste Kommunikationsteilnachricht oder die erste Antwortteilnachricht über die ersten Kommunikationseinheiten übertragen, während in dem unmittelbar darauffolgenden späteren Steuerzyklus die zweite Kommunikationsteilnachricht oder die entsprechende zweite Antwortteilnachricht, die jeweils den Rest der gesamten Kommunikationsnachricht bzw. Antwortnachricht darstellt, der während des ersten Steuerzyklus nicht übertragen werden konnte, über die zweiten Kommunikationseinheiten übertragen wird.

Hierbei wird davon ausgegangen, dass durch das Verfahren des Läufers der Läufer in dem späteren folgenden Steuerzyklus von der ersten Position in die zweite Position weiterbewegt wurde.

Hierdurch kann gewährleistet werden, dass auch bei Bewegung des Läufers und bei zyklischer Ansteuerung des Läufers eine präzise Datenkommunikation zwischen der Hauptsteuereinheit und der Untersteuereinheit erreicht werden kann, bei der sämtliche zu übertragenden Daten fehlerfrei ausgetauscht werden können.

Nach einer Ausführungsform wird die seitens der Hauptsteuereinheit über die Kommunikationseinheit empfangene Antwortnachricht oder Antwortteilnachricht basierend auf einer Position der Kommunikationseinheit an der Statoreinheit über die die Antwortnachricht oder Antwortteilnachricht empfangen wurde und der Position des Läufers beim Empfang der Antwortnachricht oder Antwortteilnachricht seitens der Hauptsteuereinheit der Untersteuereinheit des Läufers zugeordnet.

Hierdurch kann der technische Vorteil erreicht werden, dass eine Adressierung der jeweiligen Untersteuereinheit des jeweiligen Läufers über die der Hauptsteuereinheit bekannte Position des Läufers ermöglicht ist. Eine explizite Adressierung der Untersteuereinheit des Läufers innerhalb der ausgesendeten Kommunikationsnachricht ist somit nicht notwendig. Analog kann eine empfangene Antwortnachricht durch die Hauptsteuereinheit auf Basis der bekannten Position des Läufers der Untersteuereinheit dieses Läufers eindeutig zugeordnet werden. Eine explizite Identifikation der Untersteuereinheit des Läufers ist somit ebenfalls nicht notwendig.

Nach einer Ausführungsform umfasst die Zustandsangabe der seitens der Hauptsteuereinheit empfangenen Antwortnachricht eine Startinformation, dass der Automatisierungsprozess gestartet wurde, und/oder eine Stoppinformation, dass der Automatisierungsprozess gestoppt wurde, und/oder Prozessdaten des abgeschlossenen Automatisierungsprozesses und/oder Prozessdaten als Teilergebnisinformation des laufenden Automatisierungsprozesses und/oder eine Fehlermeldung bezüglich einer fehlerhaften Ausführung des Automatisierungsprozesses.

Hierdurch kann der technische Vorteil erreicht werden, dass eine präzise Information bezüglich des Zustands des durch die Untersteuereinheit gesteuerten Automatisierungsprozesses der Hauptsteuereinheit bereitgestellt werden kann. Dies ermöglicht eine präzise Steuerung des Planarantriebssystems, in der die Ergebnisse des durch die Untersteuereinheit gesteuerten Automatisierungsprozesses berücksichtigt werden können.

Nach einer Ausführungsform umfassen die Hauptsteuereinheit und die Untersteuereinheit jeweils ein Uhrenelement, wobei die Kommunikationsnachricht ferner einen Zeitstempel zum Synchronisieren der Uhrenelemente der Hauptsteuereinheit und der Untersteuereinheit umfasst.

Hierdurch kann der technische Vorteil erreicht werden, dass die Ausführung des Automatisierungsprozesses präzise in die Steuerung des gesamten Planarantriebssystems eingefügt werden kann. Hierzu werden Uhrenelemente der Hauptsteuereinheit und der Untersteuereinheit basierend auf dem durch die Hauptsteuereinheit bereitgestellten Zeitstempel zueinander synchronisiert. Basierend auf den synchronen Uhrenelementen kann somit eine präzise zeitliche Einordnung der Ausführung des durch die Untersteuereinheit gesteuerten Automatisierungsprozesses in den Gesamtprozess der Steuerung des Planarantriebssystems erreicht werden. Hierdurch kann eine weitere Verbesserung der Steuerung des Planarantriebssystems bewirkt werden.

Nach einer Ausführungsform umfasst die Kommunikationsnachricht einen Startzeitpunkt zum Starten der Ausführung des Automatisierungsprozesses durch die Untersteuereinheit.

Hierdurch kann der technische Vorteil erreicht werden, dass ein präziser Startzeitpunkt der Ausführung des Automatisierungsprozesses definiert werden kann. Hierdurch kann wiederum die zeitliche Abfolge verschiedener Teilprozesse innerhalb des Gesamtprozesses der Steuerung des Planarantriebssystems erreicht werden, was wiederum zur Verbesserung der Steuerung des Planarantriebssystems beiträgt.

Nach einem weiteren Aspekt wird ein Läufer für ein Planarantriebssystem mit einem Statormodul zum Erzeugen eines Statormagnetfelds zum Antreiben des Läufers über eine magnetische Kopplung mit einem Läufermagnetfeld des Läufers bereitgestellt, wobei der Läufer eine Mehrzahl von Magneteinheiten zum Erzeugen des Läufermagnetfelds, eine Untersteuereinheit zum Steuern eines Automatisierungsprozesses, eine Prozessvorrichtung mit wenigstens einer Aktoreinheit und/oder einer Sensoreinheit zum Ausführen des Automatisierungsprozesses und eine Läuferkommunikationseinheit zum Ausführen einer Datenkommunikation zwischen der Untersteuereinheit des Läufers und einer Hauptsteuereinheit des Planarantriebssystems umfasst.

Hierdurch kann der technische Vorteil erreicht werden, dass ein verbesserter Läufer für ein Planarantriebssystem bereitgestellt werden kann, wobei der Läufer über eine am Läufer ausgebildete Untersteuereinheit eingerichtet ist, einen Automatisierungsprozess individuell und unabhängig von der Hauptsteuereinheit des Planarantriebssystems anzusteuern. Ferner ist der Läufer eingerichtet, über ein Kommunikationssystem des Planarantriebssystems, bestehend aus verteilt an dem Läufer angeordneten Läuferkommunikationseinheiten und verteilt an der Statoreinheit angeordneten Kommunikationseinheiten, mit der Hauptsteuereinheit des Planarantriebssystems zu kommunizieren. Die auf dem Läufer ausgebildete Untersteuereinheit zum Steuern des Automatisierungsprozesses ermöglicht eine Dezentralisierung der Steuerung eines Gesamtprozesses des Planarantriebssystems. Der durch die Untersteuereinheit gesteuerte Automatisierungsprozess stellt hierbei einen Teilprozess des Gesamtprozesses des Planarantriebssystems dar. Durch die Steuerung des Automatisierungsprozesses durch die Untersteuereinheit können die Steuerungsprozesse der Hauptsteuereinheit vereinfacht werden, indem die Steuerung des Automatisierungsprozesses ausschließlich durch die Untersteuereinheit des Läufers bewirkt wird.

Nach einer Ausführungsform ist die Untersteuereinheit schichtförmig ausgebildet und flächig gleichmäßig über eine Oberfläche des Läufers verteilt angeordnet.

Hierdurch kann der technische Vorteil erreicht werden, dass durch die gleichmäßige flächige Ausbildung der Untersteuereinheit auf dem Läufer eine gleichmäßige Gewichtsverteilung des Läufers erreicht werden kann. Die gleichmäßige Gewichtsverteilung, bei der der Schwerpunkt des Läufers möglichst in einem geometrischen Zentrum des Läufers angeordnet ist, ermöglicht ein präziseres Schwebe- bzw. Flugverhalten des Läufers oberhalb der Statoroberfläche der Statoreinheit. Durch die gleichmäßige Gewichtsverteilung des Läufers durch die flächige Ausbildung der Untersteuereinheit kann ein Kippen des Läufers relativ zur Statoroberfläche der Statoreinheit vermieden werden.

Nach einer Ausführungsform ist die Untersteuereinheit unterhalb der Prozessvorrichtung oder seitlich neben der Prozessvorrichtung angeordnet.

Hierdurch kann der technische Vorteil erreicht werden, dass eine platzsparende Anordnung der Untersteuereinheit und der Prozessvorrichtung auf dem Läufer ermöglicht ist.

Nach einem weiteren Aspekt wird eine Statoreinheit für ein Planarantriebssystem mit wenigstens einem Läufer bereitgestellt, wobei das Statormodul eine Mehrzahl von Statorspulen zum Erzeugen eines Statormagnetfelds zum Antreiben des Läufers über eine magnetische Kopplung mit einem Läufermagnetfeld des Läufers und einer Mehrzahl von in einer Anordnung verteilt an der Statoreinheit angeordneten Kommunikationseinheiten zur Datenkommunikation zwischen einer Hauptsteuereinheit des Planarantriebssystems und einer am Läufer ausgebildeten Untersteuereinheit umfasst.

Hierdurch kann der technische Vorteil erreicht werden, dass eine verbesserte Statoreinheit für ein Planarantriebssystem bereitgestellt werden kann, die eine präzise Datenkommunikation zwischen der Hauptsteuereinheit des Planarantriebssystems und einer auf einem Läufer des Planarantriebssystems ausgebildeten Untersteuereinheit ermöglicht. Hierzu umfasst die Statoreinheit eine Mehrzahl von Kommunikationseinheiten, die in einer Anordnung an der Statoreinheit ausgebildet sind und eine Datenkommunikation zwischen der Hauptsteuereinheit und der Untersteuereinheit des Läufers ermöglichen.

Nach einer Ausführungsform ist ein maximaler Abstand zwischen zwei benachbarten Kommunikationseinheiten an der Statoreinheit der Anordnung kleiner oder gleich einer zweifachen maximalen Kommunikationsreichweite der Kommunikationseinheit.

Hierdurch kann der technische Vorteil erreicht werden, dass eine lückenlose Datenkommunikation zwischen der Hauptsteuereinheit des Planarantriebssystems und der Untersteuereinheit des Läufers für beliebige Positionen des Läufers auf der Statoreinheit ermöglicht ist. Hierzu weisen die in der Anordnung an der Statoreinheit ausgebildeten Kommunikationseinheiten jeweils Abstände zueinander auf, die geringer oder gleich einer zweifachen Kommunikationsreichweite der Kommunikationseinheiten sind.

Dadurch, dass die Abstände zwischen den Kommunikationseinheiten der Statoreinheit gleich oder kleiner der zweifachen Kommunikationsreichweite der Kommunikationseinheiten sind, kann erreicht werden, dass für beliebige Positionen des Läufers die am Läufer ausgebildete Läuferkommunikationseinheit immer in der Kommunikationsreichweite wenigstens einer Kommunikationseinheit der Statoreinheit positioniert ist. Dies ermöglicht die durchgehende lückenlose Datenkommunikation zwischen der Hauptsteuereinheit des Planarantriebssystems und der Untersteuereinheit des Läufers, die auch während des Verfahrens des Läufers bereitgestellt werden kann. Die Kommunikationsreichweite der Kommunikationseinheiten beschreibt hierbei eine maximale Distanz zu der jeweiligen Kommunikationseinheit, innerhalb der eine fehlerfreie drahtlose Datenkommunikation zwischen der Kommunikationseinheit und der Läuferkommunikationseinheit gewährleistet werden kann.

Eine Kommunikationsreichweite der Kommunikationseinheiten und der Läuferkommunikationseinheiten ist im Sinne der Anmeldung eine maximale Distanz, die zwei Kommunikationseinheiten oder Läuferkommunikationseinheiten zueinander aufweisen, ohne dass eine Störung der Datenkommunikation zwischen den Kommunikationseinheiten und/oder Läuferkommunikationseinheiten erfolgt.

Nach einer Ausführungsform ist ein maximaler Abstand zwischen zwei benachbarten Kommunikationseinheiten an der Statoreinheit geringer oder gleich einer minimalen flächigen Ausdehnung eines Läufers eines Planarantriebssystems.

Hierdurch kann der technische Vorteil erreicht werden, dass eine lückenlose Datenkommunikation zwischen der Hauptsteuereinheit des Planarantriebssystems und der Untersteuereinheit des Läufers ermöglicht ist. Indem Abstände zwischen unmittelbar benachbarten Kommunikationseinheiten der Statoreinheit kleiner oder gleich einer kleinsten flächigen Ausdehnung des Läufers ausgebildet sind, kann erreicht werden, dass für eine beliebige Position des Läufers der Läufer wenigstens eine Kommunikationseinheit der Statoreinheit wenigstens teilweise überdeckt. Hierdurch kann erreicht werden, dass der Läufer bzw. die wenigstens eine am Läufer ausgebildete Läuferkommunikationseinheit für jede Position des Läufers in der Kommunikationsreichweite wenigstens einer in der Statoreinheit ausgebildeten Kommunikationseinheit positioniert ist.

Nach einer Ausführungsform sind die Statorspulen durch eine zyklische Ansteuerung eingerichtet, den Läufer mit einer maximalen Geschwindigkeit über eine innerhalb eines Steuerzyklus maximal zurücklegbare Strecke anzutreiben, wobei die in einem Steuerzyklus durch den Läufer maximal zurücklegbare Strecke geringer oder gleich einer Kommunikationsreichweite der Kommunikationseinheiten und/oder geringer oder gleich einem maximalen Abstand zwischen zwei benachbarten Kommunikationseinheiten ist.

Hierdurch kann der technische Vorteil erreicht werden, dass eine lückenlose Datenkommunikation zwischen der Hauptsteuereinheit des Planarantriebssystems und der Untersteuereinheit des Läufers gewährleistet werden kann. Hierzu sind Abstände der in der Statoreinheit ausgebildeten Kommunikationseinheiten kleiner oder gleich einer maximalen Distanz, die der Läufer während eines Steuerzyklus relativ zur Statoreinheit zurücklegen kann. Hierdurch kann erreicht werden, dass der Läufer auch während des Fahrens des Läufers relativ zur Statoreinheit zu jedem Zeitpunkt innerhalb einer Kommunikationsreichweite wenigstens einer Kommunikationseinheit der Statoreinheit positioniert ist und somit zu jedem Zeitpunkt eine Datenkommunikation zwischen der Untersteuereinheit des Läufers und der Hauptsteuereinheit des Planarantriebssystems gewährleistet ist.

Nach einer Ausführungsform umfassen die Kommunikationseinheiten der Statoreinheit Sende-/Empfangseinheiten einer Nahfeldkommunikation und/oder einer Bluetooth-Kommunikation und/oder einer ZigBee-Kommunikation und/oder einer Z-Wave-Kommunikation.

Die zumindest eine am Läufer angeordnete Läuferkommunikationseinheit umfasst ebenfalls Sende-/Empfangseinheiten. Diese weist eine zu den Kommunikationseinheiten in Bezug auf die eingesetzte Kommunikationstechnologie kompatible Ausbildung auf.

Gemäß einer Ausführungsform sind die Kommunikationseinheiten der Statoreinheit und die Läuferkommunikationseinheiten des Läufers von einem gleichen Typ ausgebildet.

Hierdurch kann der technische Vorteil erreicht werden, dass eine zuverlässige Datenkommunikation zwischen der Hauptsteuereinheit des Planarantriebssystems und der Untersteuereinheit des Läufers gewährleistet werden kann. Der technische Vorteil der Nahfeldkommunikation liegt hierbei in der günstigen Ausbildung der Kommunikationseinheiten beziehungsweise Läuferkommunikationseinheiten, sowie in der technisch wenig komplexen Ausbildung des Kommunikationsprotokolls. Insbesondere kann eine Datenkommunikation ohne Handshake zwischen den beiden Kommunikationspartnern, der Hauptsteuereinheit und der Untersteuereinheit, erfolgen.

Nach einer Ausführungsform sind die Kommunikationseinheiten in einer Kommunikationsfolie ausgebildet, wobei die Kommunikationsfolie auf einer Statoroberfläche des Statormoduls ausgebildet ist.

Hierdurch kann der technische Vorteil erreicht werden, dass eine einfache Ausbildung der Kommunikationseinheiten an der Statoreinheit ermöglicht ist. Hierzu können die Kommunikationseinheiten in einer Kommunikationsfolie angeordnet sein, die wiederum auf der Statoroberfläche der Statoreinheit positionierbar ist. Dies ermöglicht eine einfache und kosteneffektive Fertigung des Kommunikationssystems. Durch die Anordnung der Kommunikationseinheiten auf der Statoroberfläche sind die Kommunikationseinheiten unmittelbar zwischen dem Läufer und der Statoroberfläche angeordnet. Hierdurch können eine Abschirmung der Kommunikationseinheiten durch die Statorspulen der Statoreinheit verhindert und eine störungsfreie Datenkommunikation über die Kommunikationseinheiten der Statoreinheit und die Läuferkommunikationseinheiten des Läufers erreicht werden. Die Kommunikationseinheiten und die Kommunikationsfolie können wiederum entsprechend dünn ausgebildet sein, sodass eine Abschwächung der magnetischen Kopplung des Läufermagnetfelds des Läufers und der Statormagnetfelder der Statorspulen nicht auftritt. Die aus einem Kunststoffmaterial herstellbare Kommunikationsfolie kann ferner als eine Schutzschicht für die Statoroberfläche dienen.

Nach einer Ausführungsform sind die Kommunikationseinheiten in das Statormodul integriert.

Hierdurch kann der technische Vorteil erreicht werden, dass die Kommunikationseinheiten robust und gesichert an der Statoreinheit ausgebildet sind. Durch die Integration der Kommunikationseinheiten in die Statoreinheit sind die Kommunikationseinheiten vor Beschädigung geschützt. Hierdurch kann wiederum eine Verbesserung der Datenkommunikation erreicht werden.

Nach einem weiteren Aspekt wird ein Planarantriebssystem mit einer Hauptsteuereinheit zum Steuern des Planarantriebssystems, einem Läufer nach einer der voranstehenden Ausführungsformen und einem Statormodul nach einer der voranstehenden Ausführungsformen bereitgestellt, wobei das Planarantriebssystem eingerichtet ist, das erfindungsgemäße Verfahren nach einer der voranstehenden Ausführungsformen auszuführen.

Hierdurch kann der technische Vorteil erreicht werden, dass ein verbessertes Planarantriebssystem mit einem erfindungsgemäßen Läufer mit den oben genannten technischen Vorteilen und einer erfindungsgemäßen Statoreinheit mit den oben genannten technischen Vorteilen bereitgestellt werden kann, das eingerichtet ist, das erfindungsgemäße Verfahren zum Steuern eines Planarantriebssystems mit den oben genannten technischen Vorteilen auszuführen.

Nach einer Ausführungsform umfasst das Kommunikationssystem wenigstens eine externe Kommunikationseinheit, wobei die externe Kommunikationseinheit zur Statoreinheit beabstandet angeordnet ist.

Hierdurch kann der technische Vorteil erreicht werden, dass über die externe Kommunikationseinheit, die zur Statoreinheit beabstandet positioniert ist, eine störungsfrei Kommunikation zwischen der Hauptsteuereinheit und den Untersteuereinheiten der Läufer für beliebige Positionen der Läufer auf der Statoreinheit ermöglicht ist. Die externe Kommunikationseinheit kann hierzu neben oder oberhalb der Statoreinheit angeordnet sein und eine Kommunikationsreichweite aufweisen, die geeignet ist, die Läufer in beliebigen Positionen auf der Statoreinheit zu umfassen.

Die Erfindung wird anhand der beigefügten Figuren näher erläutert. Hierbei zeigen:
- Fig. 1: eine schematische Darstellung eines Planarantriebssystems mit einer Statoreinheit und einem Läufer gemäß einer Ausführungsform;
- Fig. 2: eine schematische Darstellung eines Statormoduls der Statoreinheit in Fig. 1;
- Fig. 3: eine schematische Darstellung einer Unterseite eines Läufers gemäß einer Ausführungsform;
- Fig. 4: eine schematische Explosionsdarstellung eines Statorsegments der Statoreinheit in Fig. 1 gemäß einer weiteren Ausführungsform;
- Fig. 5: ein Flussdiagramm eines Verfahrens zum Steuern eines Planarantriebssystems gemäß einer Ausführungsform;
- Fig. 6: ein weiteres Flussdiagramm des Verfahrens zum Steuern eines Planarantriebssystems gemäß einer weiteren Ausführungsform;
- Fig. 7: ein weiteres Flussdiagramm des Verfahrens zum Steuern eines Planarantriebssystems gemäß einer weiteren Ausführungsform;
- Fig. 8: eine schematische Darstellung des Verfahrens zum Steuern eines Planarantriebssystems gemäß der Ausführungsform in Fig. 7;
- Fig. 9: eine schematische Darstellung eines Läufers des Planarantriebssystems gemäß einer Ausführungsform;
- Fig. 10: eine weitere schematische Darstellung eines Läufers des Planarantriebssystems gemäß einer weiteren Ausführungsform;
- Fig. 11: eine weitere schematische Darstellung eines Läufers des Planarantriebssystems gemäß einer weiteren Ausführungsform; und
- Fig. 12: schematische Darstellungen verschiedener Ausführungsformen einer Untersteuereinheit eines Läufers.

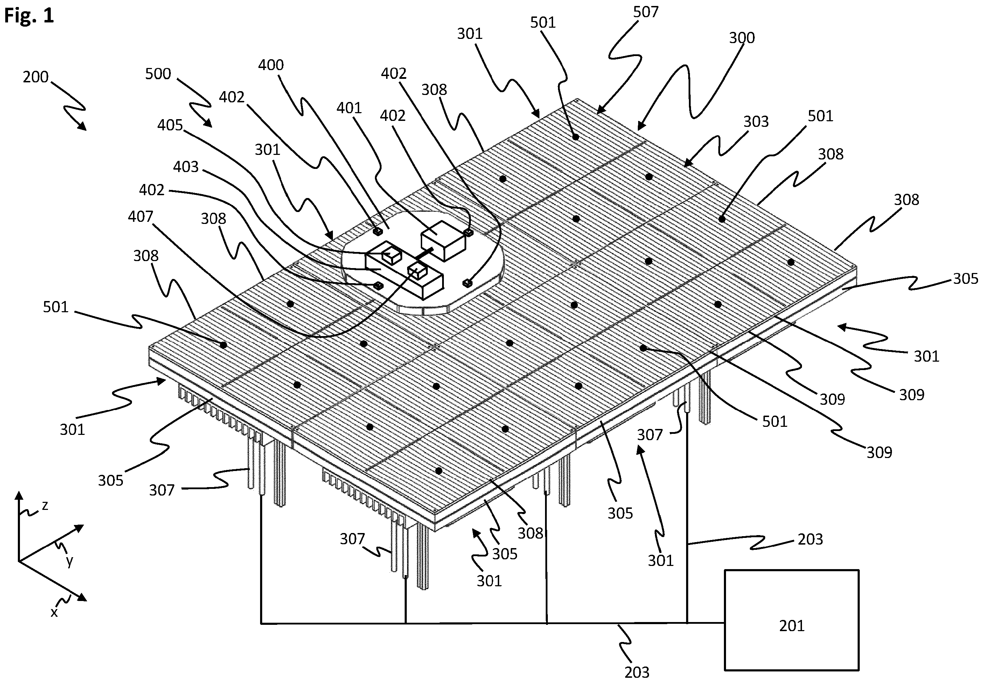

Fig. 1 zeigt eine schematische Ansicht eines Planarantriebssystems 200 mit einer Statoreinheit 300 und einem Läufer 400.

Gemäß der Ausführungsform in Fig. 1 umfasst das Planarantriebssystem 200 eine Hauptsteuereinheit 201, eine Statoreinheit 300 und einen Läufer 400. Die Hauptsteuereinheit 201 ist über eine Datenverbindung 203 mit der Statoreinheit 300 verbunden. Die Hauptsteuereinheit 201 ist eingerichtet, über Aussenden von entsprechenden Steuersignalen über die Datenverbindung 203 an die Statoreinheit 300 diese anzusteuern, den Läufer 400 entsprechend zu verfahren. Die Hauptsteuereinheit 201 ist ferner eingerichtet, ein erfindungsgemäßes Verfahren 100 zum Steuern eines Planarantriebssystems 200 auszuführen.

Erfindungsgemäß weist der Läufer 400 eine Untersteuereinheit 401 und eine Prozessvorrichtung 403 auf. Die Untersteuereinheit 401 ist für eine Steuerung eines Automatisierungsprozesses ausgebildet, der durch die Prozessvorrichtung 403 ausgeführt wird. Die Prozessvorrichtung 403 weist hierfür wenigstens eine Aktoreinheit 405 und/oder eine Sensoreinheit 407 auf, mittels denen der Automatisierungsprozess ausführbar ist. Der Automatisierungsprozess kann als ein Teilprozess eines übergeordneten und durch das gesamte Planarantriebssystem 200 auszuführenden Prozesses ausgebildet sein. Die Untersteuereinheit 401 des Läufers 400 ist hierbei eingerichtet, den Automatisierungsprozess eigenständig zu steuern und durch die Prozessvorrichtung 403 ausführen zu lassen. Die Untersteuereinheit 401 und die Prozessvorrichtung 403 sind hierzu datentechnisch miteinander verbunden, sodass die Prozesseinrichtung 403 durch die Untersteuereinheit 401 ansteuerbar ist. Die Untersteuereinheit 401 kann beispielsweise als eine speicherprogrammierbare Steuerung SPS ausgebildet sein, und der Automatisierungsprozess kann zyklisch gesteuert werden.

Der durch die Untersteuereinheit 401 gesteuerte Automatisierungsprozess kann beispielsweise ein Anordnungs- oder Orientierungsprozess sein, bei dem ein durch den Läufer 400 zu transportierendes Gut auf dem Läufer 400 in eine gewünschte Anordnung oder Orientierung gebracht wird. Hierzu kann die Prozessvorrichtung 403 beispielsweise einen Greifarm umfassen, mittels dem die Orientierung oder Anordnung des Guts auf dem Läufer 400 veränderbar ist.

Alternativ oder zusätzlich kann der Automatisierungsprozess einen Verladeprozess umfassen. So können beispielsweise mittels eines Greifarms der Prozessvorrichtung 403 oder einer anderen Verladevorrichtung Objekte oder Gegenstände vom Läufer 400 entladen und auf anderen Läufern 400 oder an dafür vorgesehene Positioniereinrichtungen des Planarantriebssystems 200 positioniert werden. Auch können über den Greifarm der Prozessvorrichtung 403 Güter eines Läufers 400 auf einem weiteren Läufer 400 verladen werden. Alternativ kann der Greifarm auch auf dem Läufer 400 positioniert sein und es können durch den Greifarm auch nicht auf dem Läufer 400 positionierte Güter bewegt werden. Beispielsweise können durch den Greifarm Güter auf den Läufer 400, auf einen weiteren Läufer oder an einer hierfür vorgesehenen nicht auf der Statoreinheit angeordneten Position angeordnet werden.

Alternativ oder zusätzlich kann die Prozessvorrichtung 403 eine Kameraeinheit umfassen, mittels der Prozesse beobachtbar sind, die auf demselben Läufer 400 oder auf anderen Läufern 400 des Planarantriebssystems 200 ausgeführt werden. Über die Untersteuereinheit 401 kann der Beobachtungsprozess ausgeführt werden. Die Kameraeinheit kann beispielsweise als eine Smart-Kamera ausgebildet sein, die eine Objekterkennung mittels einer entsprechend trainierten künstlichen Intelligenz ermöglicht.

Alternativ oder zusätzlich kann der Automatisierungsprozess einen Fertigungs- oder Verarbeitungsprozess umfassen, in dem eine Verarbeitung eines zu transportierenden Gutes oder eine Fertigung eines Objekts oder Gegenstands aus dem jeweils zu transportierenden Gut erzielt wird. Beispielsweise kann der Automatisierungsprozess einen Heiz- oder Kühlprozess umfassen, in dem das zu transportierende Gut auf eine vorbestimmte Temperatur aufgeheizt oder abgekühlt beziehungsweise auf dieser gehalten wird. Die Prozessvorrichtung 403 kann hierzu wenigstens ein Heiz- oder Kühlelement und einen Temperatursensor umfassen. Durch das Heizen oder Kühlen kann beispielsweise der Aggregatzustand des zu transportierenden Gutes geändert werden und gegebenenfalls eine Mischung oder Entmischung verschiedener Komponenten des zu transportierenden Gutes erreicht werden. Alternativ oder zusätzlich kann durch die Prozessvorrichtung 403 auch lediglich eine Temperaturüberwachung des zu transportierenden Gutes vorgenommen werden, wobei dieses beispielsweise auf einer gleichbleibenden Temperatur gehalten wird.

Alternativ oder zusätzlich kann die Prozessvorrichtung 403 ausgebildet sein, ein Wiegeprozess zum Bestimmen einer Masse des zu transportierenden Gutes durchzuführen.

Der durch die Untersteuereinheit 401 zu steuernde Automatisierungsprozess kann während des Fahrens des Läufers 400 zwischen zwei Positionen auf der Statoreinheit 300 ausgeführt werden. Alternativ kann zur Ausführung des Automatisierungsprozesses der Läufer 400 in eine dafür vorgesehene Position auf der Statoreinheit 300 verfahren werden. Alternativ kann die Ausführung des zu steuernden Automatisierungsprozesses auch durch die Bewegung des Läufers 400 selbst erfolgen, beispielweise durch eine Drehung des Läufers mit einer definierten Geschwindigkeit um transportierte Flüssigkeiten miteinander zu vermischen oder gemäß einer Zentrifuge voneinander zu trennen.

Zur Integration des durch die Untersteuereinheit 401 des Läufers 400 gesteuerten Automatisierungsprozesses in den durch das gesamte Planarantriebssystem 200 zu steuernden beziehungsweise auszuführenden übergeordneten Automatisierungsprozess weist das Planarantriebssystem 200 ferner ein Kommunikationssystem 500 auf, mittels dem eine Kommunikation zwischen der Hauptsteuereinheit 201 des Planarantriebssystems 200 und der Untersteuereinheit 401 des Läufers 400 ermöglicht ist. Über die Kommunikation zwischen der Hauptsteuereinheit 201 und der Untersteuereinheit 401 des Läufers 400 kann durch einen Startbefehl oder einen Stoppbefehl der Hauptsteuereinheit 201 ein Start oder Stopp des Automatisierungsprozesses veranlasst werden. Ferner können Statusinformationen bezüglich des ausgeführten Automatisierungsprozesses und/oder Prozessdaten von der Untersteuereinheit 401 der Hauptsteuereinheit 201 bereitgestellt werden.

Die Datenkommunikation zwischen der Hauptsteuereinheit 201 und der Untersteuereinheit 401 des Läufers 400 kann auch eine zyklische Datenkommunikation umfassen. Hierzu können in vorbestimmten Kommunikationszyklen entsprechende Nachrichten durch die Hauptsteuereinheit 201 oder die Untersteuereinheiten 401 zu vorbestimmten Zeitpunkten ausgesendet bzw. empfangen werden. Die Kommunikationszyklen können hierbei durch Steuerzyklen gegeben sein, nach denen eine zyklische Steuerung des Planarantriebssystems 200 bzw. des ausgeführten Automatisierungsprozesses erfolgt. Beispielsweise kann der Läufer 400 bzw. die Untersteuereinheit 401 des Läufers 400 dauerhaft zu den vorgegebenen Kommunikationszyklen Sensorwerte oder andere Informationen in entsprechenden Nachrichten an die Hauptsteuereinheit 301 senden. Die von der Untersteuereinheit 401 zyklisch ausgesendeten Daten können daraufhin von der Hauptsteuereinheit 201 verarbeitet und deren Information in die Steuerung des zu steuernden Automatisierungsprozesses eingebunden werden. Die Hauptsteuereinheit kann hierzu zyklisch entsprechende Kommunikationsnachrichten an die Untersteuereinheit 401 des Läufers 400 aussenden. Alternativ kann die Hauptsteuereinheit einmalig eine Kommunikationsnachricht an die Untersteuereinheit 401 des Läufers 400 aussenden, mit der der Läufer 400 zum zyklischen Aussenden der entsprechenden Daten aufgefordert wird. Alternativ kann die Untersteuereinheit 401 auch angesteuert sein, eigenständig, sprich ohne vorherige Kommunikationsnachricht der Hauptsteuereinheit 201, zyklisch Daten an die Hauptsteuereinheit 201 auszusenden.

Gegebenenfalls können basierend auf den Daten der Untersteuereinheit 401 entsprechende Folgebefehle in entsprechenden Kommunikationsnachrichten durch die Hauptsteuereinheit 201 an die Untersteuereinheit 401 ausgesendet werden. Insbesondere können zwischen der Hauptsteuereinheit 201 und der Untersteuereinheit 401 in den vorgeschriebenen Zykluszeiten der Kommunikationszyklen Kommandos bzw. Befehle oder Information ausgetauscht werden.

Zur Bereitstellung der Kommunikation weist das Kommunikationssystem 500 eine Mehrzahl von verteilt an der Statoreinheit 300 ausgebildeten Kommunikationseinheiten 501 und zumindest eine am Läufer 400 ausgebildeten Läuferkommunikationseinheit 402 auf.

In der gezeigten Ausführungsform umfasst der Läufer 400 vier Läuferkommunikationseinheiten 402, die an den vier Kanten des quadratisch geformten Läufers 400 angeordnet sind. Abweichend hiervon kann der Läufer 400 eine beliebige Anzahl von Läuferkommunikationseinheiten 402 umfassen, die an beliebigen Positionen am Läufer 400 ausgebildet sind. Gemäß einer Ausführungsform umfassen die Läuferkommunikationseinheiten 402 jeweils Antenneneinheiten zum Empfangen und Aussenden von Nachrichten sowie Auswerteeinheiten zum Auswerten der Empfangen Nachrichten. Die Antenneneinheiten und Auswerteeinheiten einer Läuferkommunikationseinheit 402 können jeweils an verschiedenen Positionen am Läufer 400 ausgebildet sein.

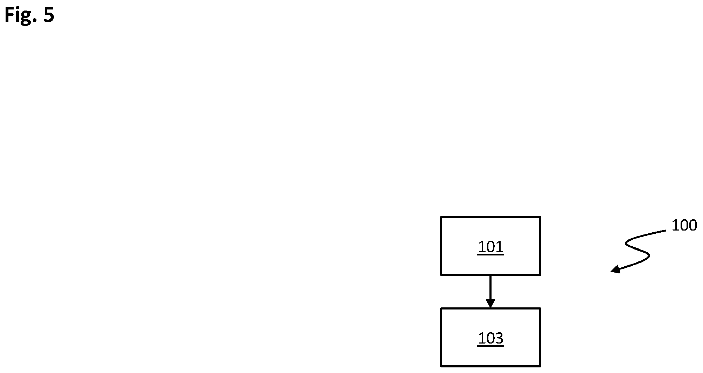

Für eine detaillierte Beschreibung des erfindungsgemäßen Verfahrens zum Steuern eines Planarantriebssystems 200 wird auf die Beschreibung zu den Fig. 5 bis Fig. 8 verwiesen.

In der gezeigten Ausführungsform umfasst die Statoreinheit 300 eine Mehrzahl von Statormodulen 301, die entlang einer X-Richtung und einer Y-Richtung der Statoreinheit 300 nebeneinander angeordnet sind und eine zusammenhängende ebene Statoroberfläche 303 der Statoreinheit 300 bilden. In der gezeigten Ausführungsform umfasst die Statoreinheit 300 sechs Statormodule 301. Die Anzahl der miteinander verbundenen Statormodule 301 einer Statoreinheit 300 soll jedoch nicht hierauf beschränkt sein und kann beliebig variieren. In der gezeigten Ausführungsform ist die Hauptsteuereinheit 201 mit jedem Statormodul 301 über die Datenverbindung 203 verbunden, sodass jedes Statormodul 301 individuell ansteuerbar ist. Über die Datenverbindung 203 können Steuersignale und/oder Kommunikationsnachrichten der Hauptsteuereinheit 201 von einem Statormodul 308 zu einem weiteren Statormodul 308 weitergeleitet werden.

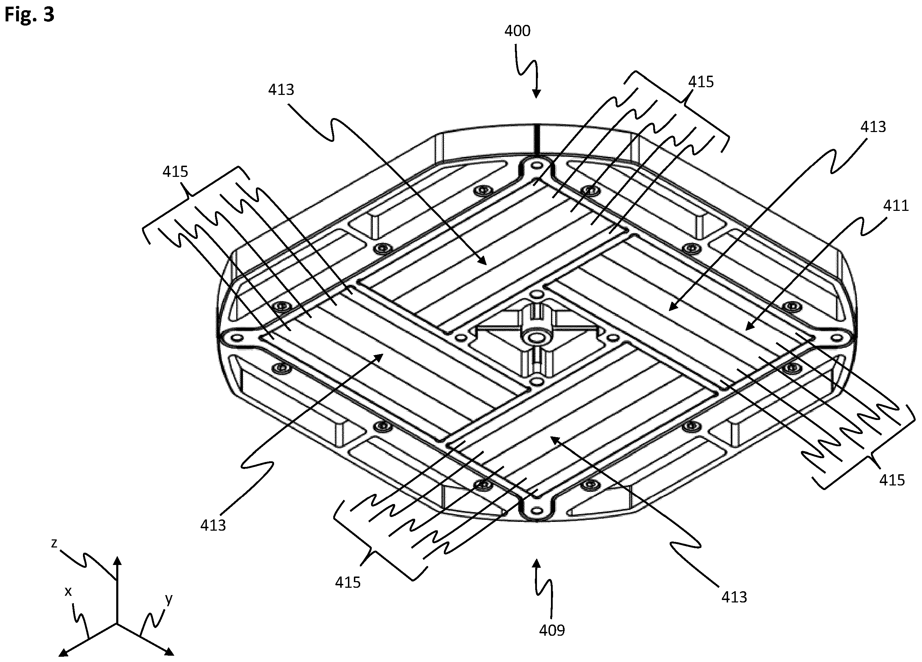

Jedes der Statormodule 301 weist vier Statorsegmente 308 auf. Jedes Statorsegment 308 umfasst X-Spulengruppen und Y-Spulengruppen, die jeweils entlang der X-Richtung oder der Y-Richtung orientiert sind. Für eine detaillierte Beschreibung der Spulengruppen wird auf Fig. 3 verwiesen. Alternativ kann ein Statormodul 301 eine beliebige Anzahl von Statorsegmenten 308 umfassen.

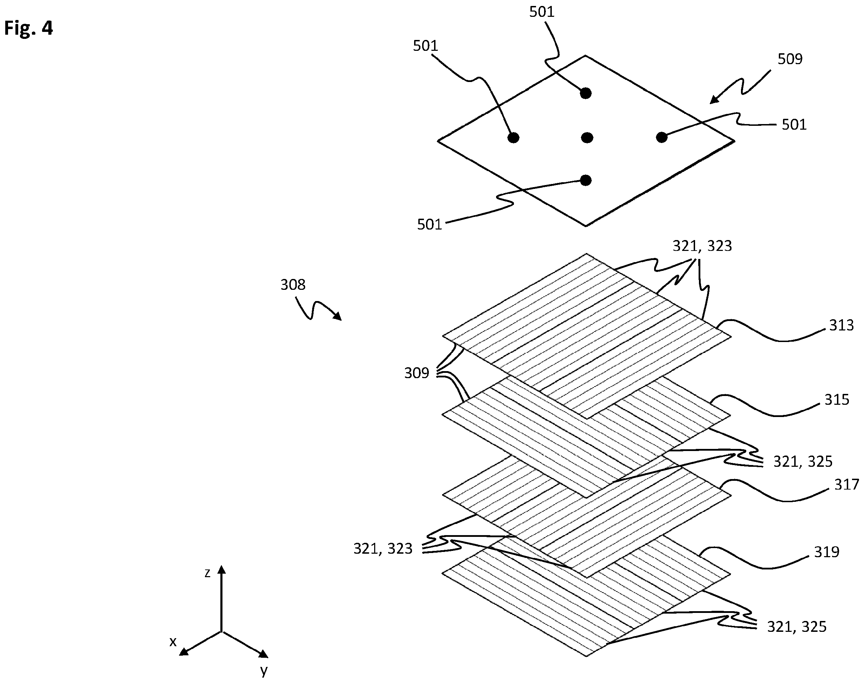

Die Statorsegmente 308 sind in der gezeigten Ausführungsform quadratisch ausgebildet und fluchtend entlang der X-Richtung und der Y-Richtung fluchtend an einander anschließend angeordnet. Eine rechteckige oder anders geformte Ausgestaltung der Statorsegmente 308 ist ebenfalls möglich. Jedes Statorsegment 308 umfasst eine Mehrzahl von bestrombaren Statorleitern 309, die wie zu Fig. 4 beschrieben in den Spulengruppen zusammengefasst sind und entlang der X-Richtung oder entlang der Y-Richtung orientiert sind. In Fig. 1 sind lediglich entlang der X-Richtung orientierte Statorleiter 309 dargestellt. Über eine Bestromung der Statorleiter 309 der Spulengruppen lassen sich Statormagnetfelder erzeugen. Mittels einer magnetischen Kopplung zwischen den Statormagnetfeldern und einem Läufermagnetfeld des Läufers 400 ist der Läufer 400 entlang der X-Richtung und der Y-Richtung schwebend über die Statoroberfläche 303 antreibbar. Indem der Läufer 400 zugleich in X-Richtung als auch in Y-Richtung bewegt wird, kann der Läufer 400 in einer beliebigen Richtung über der Statoroberfläche 303 bewegt werden. Ein Bewegen des Läufers 400 ist ferner in einer zur X-Richtung und zur Y-Richtung senkrecht orientierten Z-Richtung möglich. Auf diese Weise kann der Abstand des Läufers 400 zu der Statoroberfläche 303 variiert werden, der Läufer 400 also über der Statoroberfläche 303 angehoben oder abgesenkt werden. Eine Drehung des Läufers 400 um eine senkrecht zur Statoroberfläche 303 orientieret Drehachse oder eine Verkippung des Läufers 400 um eine parallel zur Statoroberfläche 303 orientierte Drehachse ist ebenfalls möglich.

Die Statormodule 301 weisen jeweils ein Statormodulgehäuse 305 auf, in dem eine Steuerelektronik (nicht gezeigt) zum Ansteuern des Statormoduls 301 angeordnet ist. Ferner sind im Statormodulgehäuse 305 Magnetfeldsensoren (nicht gezeigt) zum Detektieren des Läufermagnetfelds des Läufers 400 angeordnet. Zur Leistungs- und Datenversorgung der Steuerelektronik weist jedes Statormodul 301 entsprechende Anschlussleitungen 307 auf.

In der gezeigten Ausführung weist das Kommunikationssystem 500 eine Mehrzahl von an der Statoreinheit 300 ausgebildeten Kommunikationseinheiten 501 auf. Der Läufer 400 weist Läuferkommunikationseinheiten 402 auf. Die Kommunikationseinheiten 501 ermöglichen somit in kommunikativer Verbindung mit den Läuferkommunikationseinheiten 402 die Kommunikation zwischen der Hauptsteuereinheit 201 und dem Läufer 400 beziehungsweise der auf dem Läufer 400 angeordneten Untersteuereinheit 401.

Die Kommunikationseinheiten 501 sind erfindungsgemäss gleichmäßig über die gesamte Statoreinheit 300 verteilt. In der gezeigten Ausführung sind die Kommunikationseinheiten 501 in einer Kommunikationsfolie 507 angeordnet. Die Kommunikationsfolie 507 kann aus einem Kunststoffwerkstoff gefertigt sein und auf der Statoroberfläche 303 der Statoreinheit 300 positioniert werden. Hierzu kann die Kommunikationsfolie 507 an der Statoroberfläche 303 verklebt oder andersförmig fixiert werden. Die Kommunikationseinheiten 501 sind ferner mit den jeweiligen Statormodulen 301 der Statoreinheit 300 elektrisch beziehungsweise datentechnisch verbunden. Über die Verbindung der Kommunikationseinheiten 501 mit den Statormodulen 301 ist ferner eine datentechnische Verbindung der Kommunikationseinheiten 501 mit der Hauptsteuereinheit 201 bewirkt, sodass die Kommunikationseinheiten 501 durch die Hauptsteuereinheit 201 ansteuerbar beziehungsweise auslesbar sind. In einer alternativen, nicht dargestellten Ausführungsform können die Kommunikationseinheiten 501 auch unabhängig mit einer elektrischen Versorgung und datentechnisch direkt mit der Hauptsteuereinheit 201 verbunden sein.

In der gezeigten Ausführung ist an jedem Statorsegment 308 eine Kommunikationseinheit 501 angeordnet. Dies ist lediglich beispielhaft und die Kommunikationseinheiten 501 können beliebig an der Statoreinheit 300 angeordnet sein. Insbesondere kann eine Mehrzahl von Kommunikationseinheiten 501 an jedem Statormodul 301 angeordnet sein. Auch können die Kommunikationseinheiten 501, abweichend von der Anordnung in Fig. 1 nicht im geometrischen Zentrum des jeweiligen Statorsegments 308, sondern beispielsweise am Rand des Statorsegments 308 angeordnet sein.

Vorzugsweise sind die Kommunikationseinheiten 501 derart an der Statoreinheit 300 angeordnet, dass für eine beliebige Position des Läufers 400 auf der Statoreinheit 300 der Läufer 400 in einer Kommunikationsreichweite wenigstens einer Kommunikationseinheit 501 angeordnet ist. Auf diese Art kann eine lückenlose Kommunikation zwischen der Hauptsteuereinheit 201 und dem Läufer 400 beziehungsweise der Untersteuereinheit 401 des Läufers 400 erreicht werden. Positionen des Läufers 400, in der eine Kommunikation unterbunden ist, existieren auf der Statoreinheit 300 somit nicht.

Zur lückenlosen Kommunikation können die Kommunikationseinheiten 501 derart an der Statoreinheit 300 angeordnet sein, dass ein Abstand zwischen zwei unmittelbar benachbarten Kommunikationseinheiten 501 kleiner oder gleich einer zweifachen maximalen Kommunikationsreichweite der Kommunikationseinheiten 501 ist. Alternativ oder zusätzlich können die Abstände, in denen die Kommunikationseinheiten 501 am Statormodul 300 zueinander angeordnet sind in Relation zu Ausmaßen des Läufers 400 stehen. So können Abstände zwischen unmittelbar benachbarten Kommunikationseinheiten 501 kleiner oder gleich den maximalen Ausmaßen des Läufers 400, insbesondere der Breiten des Läufers 400 in X- und/oder Y-Richtungen sein. Die Abstände der Kommunikationseinheiten 501 beziehen sich hierbei auf die parallel zur Statoroberfläche 303 verlaufenden X- und Y-Richtungen.

Durch die derart beabstandeten Kommunikationseinheiten 501 kann erreicht werden, dass selbst bei kurzen Kommunikationsreichweiten der Kommunikationseinheiten 501 der Läufer 400 in jeder Position auf der Statoreinheit 300 innerhalb der Kommunikationsreichweite wenigstens einer Kommunikationseinheit 501 angeordnet ist.

Der Läufer 400 ist erfindungsgemäß ebenfalls mit wenigstens einer Läuferkommunikationseinheit 402 versehen. In der gezeigten Ausführungsform weist der Läufer 400 vier Läuferkommunikationseinheiten 402 auf, die jeweils an den vier Kanten des im Wesentlichen rechteckig ausgebildeten Läufers 400 angeordnet sind. Alternativ kann der Läufer 400 über eine höhere oder niedrigere Anzahl von Läuferkommunikationseinheiten 402 verfügen. Beispielseise kann nur eine einzige Läuferkommunikationseinheit 402 in einem geometrischen Zentrum des Läufers 400 am Läufer 400 angeordnet sein.

Zur lückenlosen Kommunikation zwischen den Kommunikationseinheiten 501 und den Läuferkommunikationseinheiten 402 können die Kommunikationseinheiten 501 an der Statoreinheit 300 zusätzlich oder alternativ derart angeordnet sein, dass der Läufer 400 bei einer zyklischen Ansteuerung des Läufers 400 und einer zyklischen Kommunikation der Hauptsteuereinheit 201 mit der Untersteuereinheit 401 über die Kommunikationseinheiten 501 an der Statoreinheit 300 und die Läuferkommunikationseinheiten 402 am Läufer 400 während eines Steuerzyklus nicht aus der Kommunikationsreichweite einer Kommunikationseinheit 501 herausbewegt werden kann. Die Kommunikationseinheiten 501 können hierfür mit Abständen zueinander an der Statoreinheit 300 angeordnet sein, die geringer oder gleich einer maximalen Distanz sind, die der Läufer 400 bei einer maximalen Geschwindigkeit des Läufers 400 innerhalb eines Steuerzyklus auf der Statoreinheit 300 zurücklegen kann. Aber auch andere Anordnungen der Kommunikationseinheiten 501 an der Statoreinheit 300 sind zur Erfüllung des beschriebenen Zwecks denkbar und vorteilhaft. Insbesondere Anordnungen entsprechend der vorherigen Beschreibung. Darüber hinaus ist es hierzu vorteilhaft, dass der Läufer 400 mit einer Mehrzahl von Läuferkommunikationseinheiten 402 ausgebildet ist, sodass zu jeder Zeit während des Steuerzyklus wenigstens eine Läuferkommunikationseinheit 402 des Läufers 400 in Reichweite zu wenigstens einer Kommunikationseinheit 501 der Statoreinheit 300 angeordnet ist.

Gemäß einer Ausführungsform sind die Kommunikationseinheiten 501 der Statoreinheit 300 und die Läuferkommunikationseinheiten 402 des Läufers 400 vom gleichen Typ ausgebildet. Die Kommunikationseinheiten 501 und Läuferkommunikationseinheiten 402 können insbesondere als Sende-/Empfangseinheiten ausgebildet sein, die sowohl ein Senden als auch ein Empfangen von Kommunikationsnachrichten und Antwortnachrichten ermöglichen. Hierdurch können Nachrichten von der Hauptsteuereinheit 201 an die Untersteuereinheit 401 ausgesendet und von der Untersteuereinheit 401 empfangen werden. Umgekehrt können Nachrichten von der Untersteuereinheit 401 an die Hauptsteuereinheit 201 ausgesendet und von der Hauptsteuereinheit 201 empfangen werden.

Die Kommunikationseinheiten 501 und Läuferkommunikationseinheiten 402 können beispielsweise als Sende-/Empfangseinheiten einer Nahfeldkommunikation, einer Bluetooth-Kommunikation, einer ZigBee-Kommunikation oder einer Z-Wave-Kommunikation ausgebildet sein. Allgemein sind die Kommunikationseinheiten 501 und Läuferkommunikationseinheiten 402 vorteilhafterweise als funkbasierte Sende-/Empfangseinheiten ausgebildet.

Alternativ zu der Ausbildung der Kommunikationseinheiten 501 in einer Kommunikationsfolie 507 können die Kommunikationseinheiten 501 auch in einer Kommunikationsschicht (in Fig. 1 nicht gezeigt) angeordnet sein. Die Kommunikationsschicht kann beispielsweise als eine zusätzliche Schicht der Statormodule 301 der Statoreinheit 300 ausgebildet sein. Beispielsweise kann die Kommunikationsschicht aus einem Kunststoffwerkstoff gefertigt sein, in den die Kommunikationseinheiten 501 eingelassen sind. Die Kommunikationsschicht kann beispielsweise die oberste Schicht eines jeden Statormoduls 301 sein und somit die Statoroberfläche 303 der Statoreinheit 300 bilden. Alternativ kann die Kommunikationsschicht in das jeweilige Statormodul 301 integriert sein und sich im Inneren des Statormoduls 301 befinden. Falls die Kommunikationsschicht in die Statoreinheit 300 integriert ist und somit nicht die Statoroberfläche 303 bildet, so ist die Kommunikationsschicht vorzugsweise unmittelbar unterhalb der Statoroberfläche, angeordnet. Die Kommunikationsschicht kann beispielsweise auch als ein integrierter Schaltkreis in einer Steuerplatine ausgebildet und in der Statoreinheit 300 integriert sein.

Gemäß einer weiteren Ausführungsformen kann wenigstens eine Kommunikationseinheit 501 des Kommunikationssystems 500 als eine externe Kommunikationseinheit 501 ausgebildet sein, die extern zur Statoreinheit 300 im Planarantriebssystem 200 angeordnet ist. Die externe Kommunikationseinheit 501 kann beispielsweise seitlich neben der Statoreinheit 300 angeordnet oder oberhalb der Statoreinheit 300 an einer hierfür vorgesehenen Halterung montiert sein. Eine Kommunikationsreichweite der externen Kommunikationseinheit 501 kann entsprechend vergrößert gegen den an der Statoreinheit 300 angeordneten Kommunikationseinheiten 501 ausgebildet sein, um eine störungsfreie Datenkommunikation mit an einer beliebigen Stelle auf der Statoreinheit 300 positionierten Läufern 400 zu ermöglichen.

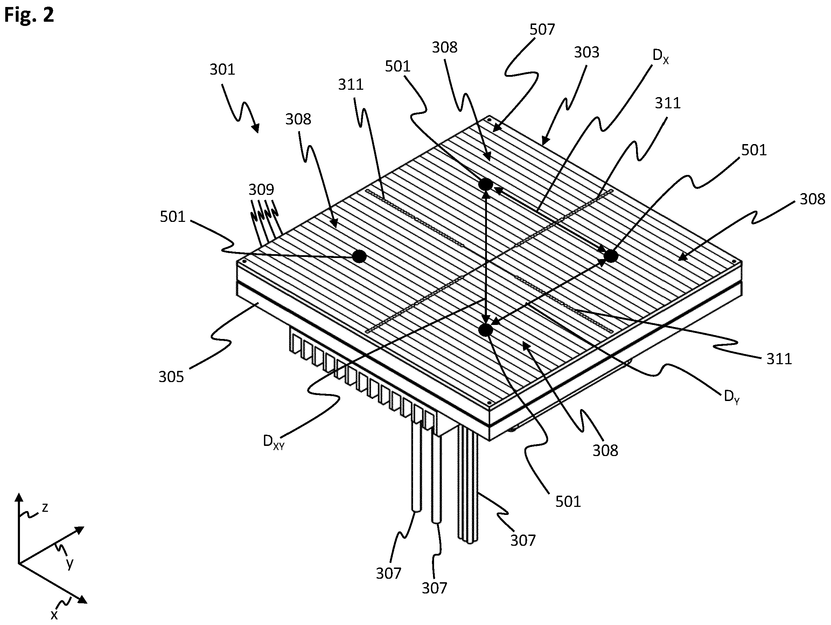

Fig. 2 zeigt eine schematische Ansicht eines Statormoduls 301 der Statoreinheit 300 in Fig. 1.

Das Statormodul 301 umfasst vier Statorsegmente 308 mit entlang der X-Richtung orientierten Statorleitern 309 auf. In Fig. 2 ist nur eine oberste Lage von Statorleitern 309 dargestellt. Unterhalb der gezeigten Lage von Statorleitern 309 ist erfindungsgemäß wenigstens eine weitere Lage von Statorleitern 309 angeordnet, die in Fig. 2 nicht sichtbar ist. Die Statorleiter 309 der wenigstens einen weiteren Lage sind erfindungsgemäß entlang der Y-Richtung orientiert. Ferner kann ein Statormodul 301 auch mehr oder weniger als die gezeigten vier Statorsegmente 308 umfassen.

Die Statorleiter 309 sind voneinander elektrisch isoliert angeordnet. Die vier Statorsegmente 308 sind quadratisch ausgebildet und bilden eine quadratische Statoroberfläche 303. Alternativ können die Statorsegmente 308 auch eine rechteckige oder beliebig anders ausgestaltete Form aufweisen. Die Statorsegmente 308 sind über eine Kontaktstruktur 311 miteinander verbunden. In der gezeigten Ausführungsform weist jedes Statorsegment 308 jeweils eine Kommunikationseinheit 501 auf. Die Kommunikationseinheiten 501 sind jeweils im geometrischen Zentrum des Statorsegments 308 angeordnet. Die Kommunikationseinheiten 501 sind in der gezeigten Ausführungsform in einer Kommunikationsfolie 507 angeordnet, die analog zur Ausführung in Fig. 1 auf der Statoroberfläche 303 des Statormoduls 301 angeordnet ist. Alternativ können die Kommunikationseinheiten 501 auch in einer Kommunikationsschicht angeordnet sein. Diese kann beispielsweise als eine zusätzliche Schicht in das Statormodul 301 integriert sein.

Gemäß einer Ausführungsform umfassen die Kommunikationseinheiten 501 jeweils eine in Fig. 2 nicht gezeigte Antenneneinheit und eine ebenfalls nicht gezeigte Auswerteeinheit. Die Antenneneinheit und die Auswerteeinheit einer Kommunikationseinheit 501 können gemäß einer Ausführungsform an verschiedenen Position an der Statoreinheit 300 angeordnet sein.

In der gezeigten Ausführungsform weisen die Kommunikationseinheiten 501 jeweils einen X-Abstand Dₓ entlang einer X-Achse, einen Y-Abstand D_{y} entlang einer Y-Achse und einen XY-Abstand D_{xy} entlang einer XY-Richtung auf. Die X-Achse und die Y-Achse beziehen sich hierbei auf ein ortsfest mit der Statoreinheit 300 verbundenes Koordinatensystem, wobei die XY-Ebene des Koordinatensystems parallel zur Statoroberfläche 303 der Statoreinheit 300 orientiert ist.

Fig. 3 zeigt eine schematische Darstellung einer Unterseite eines Läufers 400 gemäß einer Ausführungsform.

Im Betrieb des Planarantriebssystems 200 ist die Unterseite des Läufers 400 der Statoroberfläche 303 der Statoreinheit 300 zugewandt angeordnet. Der Läufer 400 weist an der Unterseite eine Magnetanordnung 409 mit einer Mehrzahl von Magneteinheiten 413 auf. Die Magneteinheiten 413 sind jeweils paarweise entlang zwei senkrecht zueinander angeordneten Richtungen x, y des Läufers 400 ausgerichtet und weisen jeweils eine Mehrzahl nebeneinander angeordneter Magnetelemente 415 auf. Die Magnetanordnung 409 ist ausgebildet, das Läufermagnetfeld des Läufers 400 zu generieren, über das eine magnetische Kopplung mit den Statormagnetfeldern der Statoreinheit 300 erreichbar ist. Über die magnetische Kopplung kann ein Antrieb des Läufers 400 relativ zur Statoreinheit 300 erreicht werden.

Im Betrieb ist die Unterseite des Läufers 400 mit der Magnetanordnung 409 im Wesentlichen parallel zu der Statoroberfläche 303 orientiert und der Statoroberfläche 303 zugewandt angeordnet.

Mittels den entlang der X-Richtung und Y-Richtung angeordneten Magneteinheiten 413 sind X-Komponenten, Y-Komponenten und Z-Komponenten des Läufermagnetfelds erzeugbar. Mittels einer Kopplung mit entsprechend orientierten Statormagnetfeldern der Statoreinheit 300 ist der Läufer 400 über der Statoroberfläche 303 der Statoreinheit 300 in eine Schwebung bringbar, in der kein Kontakt des Läufers 400 mit der Statoreinheit 300 erfolgt. Mittels einer entsprechenden Ansteuerung der Statorspulen lässt sich der Läufer 400 im schwebenden Zustand relativ zur Statoreinheit 300 antreiben.

Fig. 4 zeigt eine schematische Explosionsdarstellung eines Statorsegments 308 einer Statoreinheit 300.

In Fig. 4 sind vier voneinander getrennte Statorlagen dargestellt, die jeweils Bestandteil des Statorsegments 308 sind.

Gemäß der gezeigten Ausgestaltung weist das Statorsegment 308 in Z-Richtung übereinander angeordnet eine erste Statorlage 313, eine zweite Statorlage 315, eine dritte Statorlage 317 und eine vierte Statorlage 319 auf. Die erste Statorlage 313 und die dritte Statorlage 317 umfassen jeweils ausschließlich Statorleiter 309, die sich in X-Richtung erstrecken. Die zweite Statorlage 315 und die vierte Statorlage 319 umfassen hingegen jeweils ausschließlich Statorleiter 309, die sich in Y-Richtung erstrecken.

Die Statorleiter 309 der ersten Statorlage 313 entsprechen den in den Fig. 1 und Fig. 2 gezeigten Statorleitern 309, die an der Statoroberfläche 303 angeordnet sind. Die Statorleiter 309 der weiteren Statorlagen sind in Z-Richtung unterhalb der ersten Statorlage 313 angeordnet und somit in Fig. 1 und Fig. 2 nicht dargestellt.

Die Ausbildung des Statorsegments 308 ist beispielhaft für die in den Fig. 1 und Fig. 2 gezeigten Statorsegmente 308, die ebenfalls die in Fig. 4 gezeigte Ausbildung aufweisen.

Die Statorleiter 309 der einzelnen Statorlagen 313, 315, 317, 319 sind jeweils zu Spulengruppen 321 zusammengefasst. Jede Statorlage 313, 315, 317, 319 umfasst in der gezeigten Ausführungsform drei nebeneinander angeordnete Spulengruppen 321. Die erste und dritte Statorlage 313, 317 weisen drei entlang der X-Richtung orientierte X-Spulengruppen 323 auf, während die zweite und vierte Statorlage 315, 319 drei entlang der Y-Richtung orientierte Y-Spulengruppen 325 aufweisen. Durch entsprechende Bestromung sind die X-Spulengruppen 323 eingerichtet, ein Statormagnetfeld mit einer Z-Komponente und einer Y-Komponente zu generieren, während die Y-Spulengruppen eingerichtet sind, ein Statormagnetfeld mit einer Z-Komponente und einer X-Komponente zu generieren. Über die entsprechenden X-, Y- oder Z-Komponente des Statormagnetfelds lassen sich translatorische Bewegungen des Läufers 400 in X-, Y- und Z-Achsen und rotatorische Bewegungen um parallel zu den X-, Y- und Z-Achsen ausgerichteten Rotationsachsen erreichen.

Die sechs Statorleiter 309 in jeder Spulengruppe 321 können insbesondere als ein Drei-Phasen-System zusammengefasst sein, bei dem jeweils zwei miteinander verbundene Statorleiter 309 eine der drei Phasen U, V, W des Drei-Phasen-Systems bilden.

In Fig. 4 ist ferner eine weitere Lage des Statorsegments 308 dargestellt, die eine Mehrzahl von Kommunikationseinheiten 501 umfasst. In der gezeigten Ausführungsform sind fünf Kommunikationseinheiten 501 in einer Kommunikationsschicht 509 angeordnet. Die Kommunikationsschicht 509 ist hierbei als eine in Z-Richtung oberste Schicht des Statorsegments 308 angeordnet. Die Kommunikationsschicht 509 kann somit derart ausgebildet sein, dass durch die Kommunikationsschicht 509 die Statoroberfläche 303 des Statormoduls 301 beziehungsweise der Statoreinheit 300 gebildet ist. Alternativ kann über der Kommunikationsschicht 509 eine weitere Schicht angeordnet sein, die die Statoroberfläche 303 bildet. Die Kommunikationsschicht 509 kann beispielsweise als eine Platine ausgebildet sein. Die Kommunikationsschicht 509 kann aus einem Kunststoffwerkstoff ausgebildet sein, insbesondere derart, dass durch die Kommunikationsschicht 509 ein Abschluss des Statormoduls 301 bzw. der Statoreinheit 300 erreicht ist.

In der gezeigten Ausführung sind im gezeigten Statorsegment 308 fünf Kommunikationseinheiten 501 angeordnet. Dies ist lediglich beispielhaft und soll die Erfindung nicht einschränken. Pro Statorsegment 308 kann erfindungsgemäß eine beliebige Anzahl von Kommunikationseinheiten 501 angeordnet sein. Insbesondere kann die Anzahl von Kommunikationseinheiten 501 pro Statorsegment 308 von der Kommunikationsreichweite der jeweiligen Kommunikationseinheiten 501 abhängen, sodass eine größere Kommunikationsreichweite der Kommunikationseinheiten 501 eine geringere Anzahl von Kommunikationseinheiten 501 pro Statorsegment 308 erlaubt, da die einzelnen Kommunikationseinheiten 501 jeweils mit größeren Abständen zueinander angeordnet werden können. Gleiches gilt für die gesamte Statoreinheit 300 oder die Statormodule 301. In Abhängigkeit der Anzahl von Statormodulen 301, die in die Statoreinheit 300 integriert sind, und damit verbunden, in Abhängigkeit der Größe der Statoreinheit 300 kann in die Statoreinheit 300 eine beliebige Anzahl von Kommunikationseinheiten 501 integriert sein. Diese Anzahl kann wiederum von der jeweiligen Kommunikationsreichweite der Kommunikationseinheiten 501 abhängen.

Fig. 5 zeigt ein Flussdiagramm eines Verfahrens 100 zum Steuern eines Planarantriebssystems 200 gemäß einer Ausführungsform.

Das erfindungsgemäße Verfahren 100 zum Steuern eines Planarantriebssystems 200 kann durch ein Planarantriebssystem 200 mit einer Hauptsteuereinheit 201, einer Statoreinheit 300 und wenigstens einem Läufer 400 mit einer Untersteuereinheit 401 gemäß den Ausführungsformen in den Figuren 1 bis 4 ausgeführt werden. Hierzu umfasst das Planarantriebssystem 200 ferner ein Kommunikationssystem 500 mit einer Mehrzahl von Kommunikationseinheiten 501 und zumindest einer Läuferkommunikationseinheit 402. Eine Mehrzahl der Kommunikationseinheiten 501 ist hierbei an der Statoreinheit 300 ausgebildet, während wenigstens eine Läuferkommunikationseinheit 402 am Läufer 400 angeordnet ist. Der Läufer 400 kann ferner eine Prozessvorrichtung 403 zum Ausführen des durch die Untersteuereinheit 401 zu steuernden Automatisierungsprozesses umfassen.

Wie oben dargelegt weist die Statoreinheit 300 eine Mehrzahl von Statorspulen 321 zum Erzeugen eines Statormagnetfelds auf. Der Läufer 400 weist seinerseits eine Mehrzahl von Magneteinheiten 413 zum Erzeugen eines Läufermagnetfelds auf. Über eine magnetische Kopplung zwischen dem Statormagnetfeld und dem Läufermagnetfeld ist der Läufer 400 auf der Statoreinheit 300 antreibbar. Die Hauptsteuereinheit 201 des Planarantriebssystems 200 ist eingerichtet, das Planarantriebssystem 200 zu steuern und insbesondere das Verfahren des wenigstens einen Läufers 400 auf der Statoreinheit 300 zu steuern. Die Untersteuereinheit 401 des Läufers 400 ist hingegen eingerichtet, den durch die Prozessvorrichtung 403 ausführbaren Automatisierungsprozess zu steuern.

Der Automatisierungsprozess kann hierbei als ein Teilprozess eines durch das Planarantriebssystem 200 ausgeführten Gesamtprozesses gesehen werden. Der Gesamtprozess kann hierbei das Verfahren der verschiedenen Läufer 400 bzw. des wenigstens einen Läufers 400 auf der Statoreinheit 300 zum Transportieren verschiedener Güter durch den wenigstens einen Läufer 400 umfassen. Ferner kann der Gesamtprozess den wie oben beschriebenen Automatisierungsprozess umfassen, der beispielsweise einen Verarbeitungs- oder Herstellungsprozess eines durch den Läufer 400 transportierten Guts umfassen kann. Die Steuerung des Planarantriebssystems 200 kann somit erfindungsgemäß das Verfahren beziehungsweise Bewegen des Läufers 400 zwischen verschiedenen Positionen auf der Statoreinheit 300, wie auch das Ausführen des Automatisierungsprozesses durch die Prozessvorrichtung 403 des Läufers 400 und die Steuerung des Automatisierungsprozesses durch die Untersteuereinheit 401 des Läufers 400 umfassen.

Erfindungsgemäß wird somit zum Steuern des Planarantriebssystems 200 zunächst in einem Sendeschritt 101 durch die Hauptsteuereinheit 201 über das Kommunikationssystem 500 eine Kommunikationsnachricht an die Untersteuereinheit 401 des Läufers 400 ausgesendet. Die Kommunikationsnachricht umfasst hierbei einen Startbefehl zum Starten des durch den Läufer 400 bzw. durch die Prozessvorrichtung 403 des Läufers 400 auszuführenden Automatisierungsprozesses. Die Kommunikationsnachricht ist hierbei durch den Startbefehl eingerichtet, bei Empfang durch die Untersteuereinheit 401 des Läufers 400 diese zum Starten des Automatisierungsprozesses zu veranlassen.

Erfindungsgemäß wird nach Empfang der Kommunikationsnachricht durch die Untersteuereinheit 401 des Läufers 400 durch die Untersteuereinheit 401 der auszuführende Automatisierungsprozess angesteuert.

Nach Empfang der Kommunikationsnachricht durch die Untersteuereinheit 401 des Läufers 400 wird erfindungsgemäß in einem Empfangsschritt 103 eine durch die Untersteuereinheit 401 über das Kommunikationssystem 500 an die Hauptsteuereinheit 201 ausgesendete Antwortnachricht durch die Hauptsteuereinheit 201 empfangen.

Die Antwortnachricht umfasst hierbei eine Zustandsangabe über einen Zustand des durch die Untersteuereinheit 401 gesteuerten Automatisierungsprozesses. Die Zustandsangabe der Antwortnachricht kann beispielsweise eine Startinformation umfassen, mittels der eine Rückmeldung an die Hauptsteuereinheit 201, dass der Automatisierungsprozess durch die Untersteuereinheit 401 entsprechend dem Startbefehl der Kommunikationsnachricht gestartet wurde, bewirkt wird. Alternativ oder zusätzlich kann die Zustandsangabe eine Stoppinformation umfassen, die besagt, dass der Automatisierungsprozess gestoppt wurde. Das Stoppen des Automatisierungsprozesses kann hierbei beispielsweise eine Beendigung des Automatisierungsprozesses durch das Erreichen des erwünschten Ziels des Automatisierungsprozesses umfassen. Das Stoppen des Automatisierungsprozesses kann auch eine Unterbrechung des Automatisierungsprozesses beschreiben, die aufgrund beispielsweise einer Fehlfunktion des Automatisierungsprozesses vorgenommen wurde. Alternativ oder zusätzlich kann die Zustandsinformation Prozessdaten des Automatisierungsprozesses umfassen, die beispielsweise ein Endergebnis oder Teilergebnisse des ausgeführten Automatisierungsprozesses beschreiben. Die End- oder Teilergebnisse können wiederum Prozessdaten umfassen, durch die der Fortschritt des gesteuerten Automatisierungsprozesses beschrieben sind. Alternativ oder zusätzlich kann die Zustandsangabe eine Fehlermeldung umfassen, in der eine fehlerhafte Ausführung des Automatisierungsprozesses angegeben ist. Durch die Zustandsangabe kann eine präzise Beschreibung des Zustands des durch die Untersteuereinheit 401 gesteuerten und durch die Prozessvorrichtung 403 ausgeführten Automatisierungsprozesses bereitgestellt werden.

Die Hauptsteuereinheit 201 kann bei der Steuerung des Planarantriebssystems 200 die Zustandsinformation der Antwortnachricht berücksichtigen. Beispielsweise kann die Hauptsteuereinheit 201 bei erfolgreichem Abschluss des durch die Prozessvorrichtung 403 ausgeführten Automatisierungsprozesses zusätzliche Folgeprozesse veranlassen. Beispielsweise kann die Hauptsteuereinheit 201 nach erfolgreichem Abschluss des Automatisierungsprozesses den Läufer 400 zu einer dafür vorgesehenen Position auf der Statoreinheit 300 ansteuern, um beispielsweise das durch den Automatisierungsprozess verarbeitete oder hergestellte Gut zu verladen bzw. vom Läufer 400 zu entfernen. Alternativ können auch weitere Maßnahmen durch die Hauptsteuereinheit 201 veranlasst werden. Insgesamt können durch die bidirektionale Datenkommunikation zwischen der Hauptsteuereinheit 201 und der Untersteuereinheit 401 die Ergebnisse des durch die Untersteuereinheit 401 gesteuerten Automatisierungsprozesses in die Gesamtsteuerung des Planarantriebssystems 200 einfließen.

Gemäß einer Ausführungsform weisen die Hauptsteuereinheit 201 und die Untersteuereinheit 401 jeweils ein Uhrenelement auf. Ferner umfasst die durch die Hauptsteuereinheit 201 ausgesendete Kommunikationsnachricht einen durch die Hauptsteuereinheit 201 definierten Zeitstempel. Alternativ weist nicht jede Kommunikationsnachricht einen Zeitstempel auf. Stattdessen werden nur in vorbestimmten zeitlichen Abständen Kommunikationsnachrichten mit Zeitstempeln versehen und somit die Steuereinheiten in den vorbestimmten zeitlichen Abständen synchronisiert. Mittels des Zeitstempels kann eine Synchronisation der beiden Uhrenelemente der Hauptsteuereinheit 201 und der Untersteuereinheit 401 erreicht werden. Über das Synchronisieren der beiden Uhrenelemente der Hauptsteuereinheit 201 und der Untersteuereinheit 401 kann eine synchronisierte Zeiterfassung der beiden Steuereinheiten 201, 401 erreicht werden. Über die erfolgte Synchronisation der beiden Uhrenelemente der Hauptsteuereinheit 201 und der Untersteuereinheit 401 kann eine ausgesendete Kommunikationsnachricht neben dem Startbefehl zum Ausführen des Automatisierungsprozesses einen von der Hauptsteuereinheit 201 vordefinierten Startzeitpunkt umfassen. Hierdurch kann erreicht werden, dass der Automatisierungsprozess durch die Untersteuereinheit 401 zu dem vorbestimmten Startzeitpunkt gestartet wird, der wiederum einen beliebigen Zeitraum später als der Empfang der Kommunikationsnachricht durch die Untersteuereinheit 401 zeitlich angeordnet sein kann. Darüber hinaus können durch die Synchronisation zwischen der Hauptsteuereinheit 201 und den Untersteuereinheiten 401 der Läufer 400 ausgetauschte Daten exakten Zeitpunkten zugeordnet werden.

Ohne eine Synchronisation der Uhrenelemente der beiden Steuereinheiten 201, 401 kann alternativ der Automatisierungsprozess durch die Untersteuereinheit 401 unmittelbar nach Empfang der Kommunikationsnachricht inklusive des darin enthaltenen Startbefehls gestartet werden. Alternativ kann der Untersteuereinheit 401 ein Befehl bereitgestellt werden, den Automatisierungsprozess bei Ablauf einer vorbestimmten Zeitspanne nach Empfang des jeweiligen Startbefehls zu starten oder zu beenden.

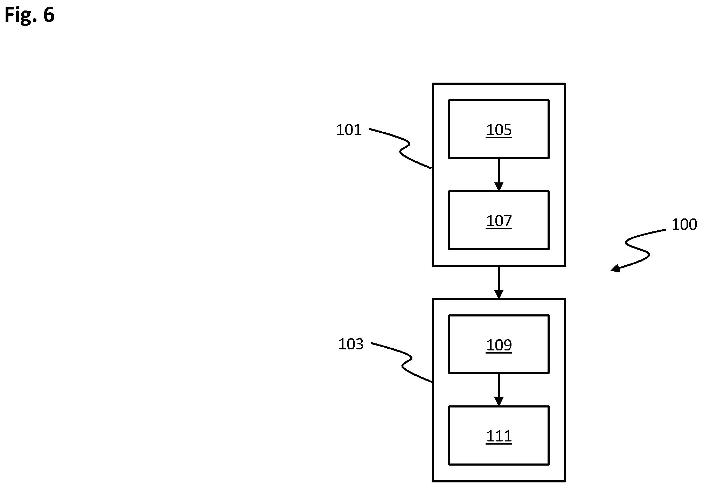

Fig. 6 zeigt ein weiteres Flussdiagramm des Verfahrens 100 zum Steuern eines Planarantriebssystems 200 gemäß einer weiteren Ausführungsform.

Die in Fig. 6 gezeigte Ausführungsform des erfindungsgemäßen Verfahrens 100 basiert auf der Ausführungsform in Fig. 5 und umfasst alle dort beschriebenen Verfahrensschritte. Von einer erneuten detaillierten Beschreibung wird daher im Folgenden abgesehen.

In der gezeigten Ausführungsform umfasst der seitens der Hauptsteuereinheit 201 ausgeführte Sendeschritt 101 einen Ermittlungsschritt 105. Zum Aussenden der Kommunikationsnachricht wird im Ermittlungsschritt 105 zunächst zu einer Position des Läufers 400 auf der Statoreinheit 300 eine Kommunikationseinheit 501 der Statoreinheit 300 ermittelt, die zu der jeweiligen Position des Läufers 400 benachbart angeordnet ist.

Erfindungsgemäß ist der Hauptsteuereinheit 201 zum Steuern des Planarantriebssystems 200 und insbesondere zum Verfahren des Läufers 400 auf der Statoreinheit 300 zu jedem Zeitpunkt eine aktuelle Position des Läufers 400 auf der Statoreinheit 300 bekannt. Hierzu umfasst die Statoreinheit 300 beispielweise eine Mehrzahl von Magnetfeldsensoren, mittels denen das Läufermagnetfeld des Läufers 400 detektierbar ist. Über eine derartige Detektion des Läufermagnetfelds kann eine entsprechende Positionsbestimmung des Läufers 400 auf der Statoreinheit 300 erfolgen. Über die Kenntnis der Position des Läufers relativ zur Statoreinheit 300 kann durch die Hauptsteuereinheit 201 zu jeder Position des Läufers 400 auf der Statoreinheit 300 wenigstens eine Kommunikationseinheit 501 ermittelt werden, die an der Statoreinheit 300 benachbart zur jeweiligen Position des Läufers 400 angeordnet ist. Eine Kommunikationseinheit 501 ist hierbei zur Position des Läufers 400 benachbart, wenn die jeweilige Kommunikationseinheit 501 zur jeweiligen Position des Läufers 400 einen Abstand aufweist, der geringer als ein vorbestimmter Grenzwert ist. Hierzu ist der Hauptsteuereinheit 201 wiederum jede Position einer jeden Kommunikationseinheit 501 der Statoreinheit 300 bekannt.

Nach Ermittlung der zur aktuellen Position des Läufers 400 auf der Statoreinheit 300 benachbart angeordneten Kommunikationseinheiten 501 der Statoreinheit 300 wird seitens der Hauptsteuereinheit 201 in einem Ansteuerungsschritt 107 zum Aussenden der Kommunikationsnachricht die ausgewählte Kommunikationseinheit 501 zum Aussenden der Kommunikationsnachricht an die Untersteuereinheit 401 des Läufers 400 angesteuert. Alternativ kann im Ermittlungsschritt 105 eine Mehrzahl von zum Läufer 400 in der derzeitigen Position benachbarten Kommunikationseinheiten 501 der Statoreinheit 300 ermittelt werden. Entsprechend können im Ansteuerungsschritt 107 die verschiedenen ausgewählten Kommunikationseinheiten 501 zum Aussenden der Kommunikationsnachricht simultan angesteuert werden.

Wie oben dargelegt, umfasst der Läufer 400 ebenfalls wenigstens eine Läuferkommunikationseinheit 402, die am Läufer 400 ausgebildet ist. Über die wenigstens eine Läuferkommunikationseinheit 402 ist der Läufer 400 in der Lage, die seitens der Hauptsteuereinheit 201 ausgesendete Kommunikationsnachricht zu empfangen. Weist der Läufer 400 gemäß der Ausführungsform in Fig. 1 eine Mehrzahl von Läuferkommunikationseinheiten 402 auf, so kann ein Empfang der Kommunikationsnachricht über jede oder eine Mehrzahl der Läuferkommunikationseinheiten 402 des Läufers 400 erfolgen.

In der gezeigten Ausführungsform umfasst der seitens der Hauptsteuereinheit 201 ausgeführte Empfangsschritt 103 ferner einen weiteren Ermittlungsschritt 109. Im weiteren Ermittlungsschritt 109 werden durch die Hauptsteuereinheit 201 die zur aktuellen Position des Läufers 400 in der Statoreinheit 300 benachbart angeordneten Kommunikationseinheiten 501 ermittelt und ausgewählt. Gemäß einer Ausführungsform können der Ermittlungsschritt 105 und der weitere Ermittlungsschritt 109 in einem gemeinsamen Verfahrensschritt ausgeführt werden. Die zum Aussenden der Kommunikationsnachricht zu der Position des Läufers 400 benachbarten Kommunikationseinheiten 501 der Statoreinheit 300 können für das Empfangen der Antwortnachricht im Empfangsschritt 103 ebenfalls verwendet werden. Dies ist insbesondere dann möglich, wenn zwischen dem Aussenden der Kommunikationsnachricht im Sendeschritt 101 und dem Empfangen der Antwortnachricht im Empfangsschritt 103 die Position des Läufers 400 unverändert geblieben ist. Bei einer Veränderung der Position des Läufers 400 durch ein Bewegen des Läufers 400 auf der Statoreinheit 300 werden im weiteren Ermittlungsschritt 109 hingegen andere Kommunikationseinheiten 501 ermittelt, als zum Aussenden der Kommunikationsnachricht im Ermittlungsschritt 105 ermittelt wurden. Insbesondere werden andere Kommunikationseinheiten 501 ermittelt, wenn der Läufer 400 sich außerhalb einer Kommunikationsreichweite der ursprünglich ermittelten Kommunikationseinheit 501 befindet.

In einem seitens der Hauptsteuereinheit 201 ausgeführten Ausleseschritt 111 werden nach Ermittlung zur aktuellen Position des Läufers 400 benachbarte Kommunikationseinheiten 501 der Statoreinheit 300, diese entsprechend ermittelten Kommunikationseinheiten 501 ausgelesen und die Antwortnachricht durch die Hauptsteuereinheit 201 empfangen.

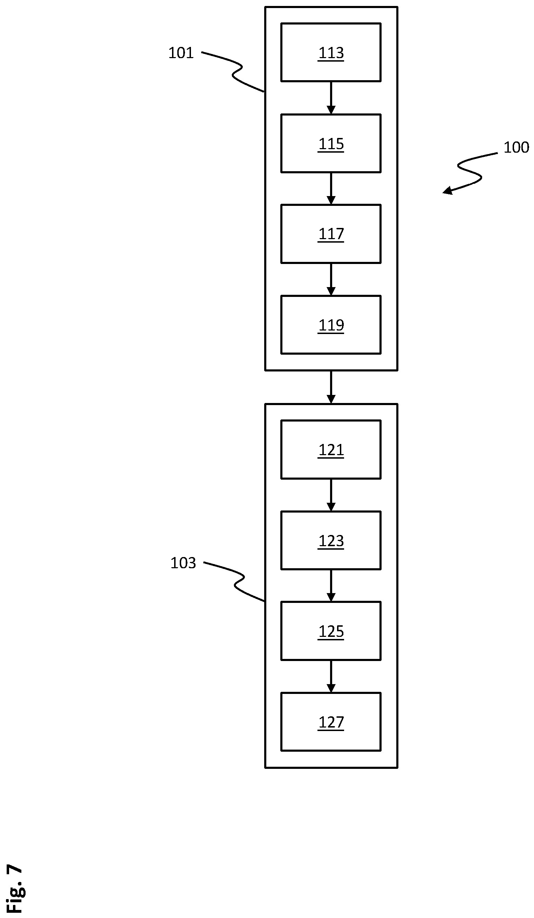

Fig. 7 zeigt ein weiteres Flussdiagramm des Verfahrens 100 zum Steuern eines Planarantriebssystems 200 gemäß einer weiteren Ausführungsform.

In der gezeigten Ausführungsform wird der Fall einer Kommunikation zwischen der Hauptsteuereinheit 201 und der auf dem Läufer 400 angeordneten Untersteuereinheit 401 während eines Antriebs des Läufers 400 und eines Bewegens des Läufers 400 zwischen einer ersten Position P1 und einer zweiten Position P2 beschrieben. Ferner wird der Fall beschrieben, dass eine Ansteuerung des Läufers 400 zyklisch erfolgt, indem der Läufer 400 in entsprechenden Steuerzyklen zum Bewegen zwischen den ersten und zweiten Positionen P1, P2 durch die Hauptsteuereinheit 201 angesteuert wird. Die zyklische Ansteuerung des Planarantriebssystems 200 umfasst ferner die Datenkommunikation zwischen der Hauptsteuereinheit 201 und der Untersteuereinheit 401 des Läufers 400. In der gezeigten Ausführungsform ist hierbei der Fall beschrieben, dass das Aussenden der Kommunikationsnachricht im Sendeschritt 101 durch die Hauptsteuereinheit 201 an die Untersteuereinheit 401 während eines Steuerzyklus nicht vollständig abgeschlossen wird, sodass das Aussenden der gesamten Kommunikationsnachricht über zwei zeitlich aufeinanderfolgende Steuerzyklen verteilt ausgeführt werden muss. Analog wird der Fall beschrieben, dass das Empfangen der durch die Untersteuereinheit 401 ausgesendeten Antwortnachricht durch die Hauptsteuereinheit 201 ebenfalls nicht vollständig in einem Steuerzyklus ausgeführt werden kann, sodass auch das Empfangen der gesamten Antwortnachricht über zwei zeitlich aufeinanderfolgende Steuerzyklen verteilt ausgeführt werden muss.

Hierzu umfasst in der gezeigten Ausführungsform der seitens der Hauptsteuereinheit 201 ausgeführte Sendeschritt 101 einen ersten Kommunikationseinheitsermittlungsschritt 113. Im ersten Kommunikationseinheitsermittlungsschritt 113 werden erste Kommunikationseinheiten 503 der Statoreinheit 300 ermittelt, die zu einer ersten Position P1 des Läufers 400 auf der Statoreinheit 300 benachbart angeordnet sind.

In einem ersten Teilsendeschritt 115 werden darauffolgend die ermittelten ersten Kommunikationseinheiten 503 zum Aussenden einer ersten Kommunikationsteilnachricht an die Untersteuereinheit 401 des Läufers 400 angesteuert. Die erste Kommunikationsteilnachricht beschreibt hierbei einen Teil der vollständigen Kommunikationsnachricht und insbesondere den Teil, der in einem ersten Steuerzyklus des Planarantriebssystems 200 vollständig durch die entsprechend ermittelten ersten Kommunikationseinheiten 503 ausgesendet werden kann.

Da der Läufer 400 während der Datenkommunikation von der ersten Position P1 zur zweiten Position P2 auf der Statoreinheit 300 weiterbewegt wird, werden in einem zweiten Kommunikationseinheitsermittlungsschritt 117 zweite Kommunikationseinheiten 505 ermittelt, die in der Statoreinheit 300 zur zweiten Position P2 des Läufers 400 benachbart angeordnet sind. Je nach Abstand zwischen den ersten und zweiten Positionen P1, P2 können die zweiten Kommunikationseinheiten 505 wenigstens teilweise identisch zu den ersten Kommunikationseinheiten 503 sein. Ist der Läufer 400 hingegen zwischen der ersten Position P1 und der zweiten Position P2 um eine große Distanz weiterbewegt worden, so unterscheiden sich die ersten Kommunikationseinheiten 503 von den zweiten Kommunikationseinheiten 505.

Darauffolgend werden in einem zweiten Teilsendeschritt 119 die zur zweiten Position P2 des Läufers 400 benachbarten zweiten Kommunikationseinheiten 505 zum Aussenden einer zweiten Kommunikationsteilnachricht angesteuert. Die zweite Kommunikationsteilnachricht beschreibt hierbei einen weiteren Teil der ursprünglichen Kommunikationsnachricht, insbesondere den Teil der ursprünglichen Kommunikationsnachricht, der im ersten Steuerzyklus nicht ausgesendet werden konnte. Der zweite Kommunikationseinheitsermittlungsschritt 117 wie auch der zweite Teilsendeschritt 119 werden somit in dem auf den ersten Steuerzyklus zeitlich folgenden weiteren Steuerzyklus ausgeführt. Der Sendeschritt 101 und das Aussenden der Kommunikationsnachricht sind hierbei in der gezeigten Ausführungsform auf zwei aufeinanderfolgende Steuerzyklen verteilt ausgeführt. Durch das Bewegen des Läufers 400 von der ersten Position P1 zur zweiten Position P2 können somit die ersten und zweiten Kommunikationsteilnachrichten durch wenigstens teilweise verschiedene erste und zweite Kommunikationseinheiten 503, 505 ausgesendet werden.

Analog erfolgt ein Empfang einer durch die Untersteuereinheit 401 des Läufers 400 ausgesendeten Antwortnachricht in dem seitens der Hauptsteuereinheit 201 ausgeführten Empfangsschritt 103 über zwei zeitlich nacheinander folgende Steuerzyklen.

Hierzu umfasst der Empfangsschritt 103 einen weiteren ersten Kommunikationseinheitsermittlungsschritt 121. Im weiteren ersten Kommunikationseinheitsermittlungsschritt 121 werden die zur ersten Position P1 benachbart angeordneten ersten Kommunikationseinheiten 503 ermittelt.

In einem ersten Teilausleseschritt 123 werden die ermittelten ersten Kommunikationseinheiten 503 durch die Hauptsteuereinheit 201 ausgelesen und eine erste Antwortteilnachricht wird empfangen.

In einem weiteren zweiten Kommunikationseinheitsermittlungsschritt 125 werden wiederum zweite Kommunikationseinheiten 505 ermittelt, die zur zweiten Position P2 des Läufers 400 in der Statoreinheit 300 benachbart angeordnet sind.

In einem zweiten Teilausleseschritt 127 werden die ermittelten zweiten Kommunikationseinheiten 505 ausgelesen und durch die Hauptsteuereinheit 201 wird eine zweite Antwortteilnachricht empfangen.

Die ersten und zweiten Antwortteilnachrichten beschreiben hierbei jeweils Teile der ursprünglich auszusendenden Antwortnachricht, insbesondere die Teile, die in den zwei zeitlich aufeinanderfolgenden Steuerzyklen durch die Untersteuereinheit 401 ausgesendet werden konnten.

Die zu den ersten und zweiten Positionen P1, P2 benachbarten ersten und zweiten Kommunikationseinheiten 503, 505 können darüber ermittelt werden, dass die entsprechenden Kommunikationseinheiten 501 einen vordefinierten maximalen Abstand zur entsprechenden Position nicht überschreiten.

Das gezeigte Aussenden der Kommunikationsnachricht im Sendeschritt 101 bzw. das Empfangen der Antwortnachricht im Empfangsschritt 103 kann jeweils auf zwei unmittelbar zeitlich aufeinanderfolgende Steuerzyklen verteilt ausgeführt werden. Alternativ kann das Senden im Sendeschritt 101 der zwei Kommunikationsteilnachrichten bzw. das Empfangen der zwei Antwortteilnachrichten im Empfangsschritt 103 jeweils auf zwei Steuerzyklen des Planarantriebssystems 200 verteilt ausgeführt werden, die nicht unmittelbar zeitlich aufeinanderfolgen und zwischen denen wenigstens ein weiterer Steuerzyklus ausgeführt wurde.

Ebenfalls ist es denkbar, dass die Kommunikationsnachricht und/oder die Antwortnachricht auf mehr als zwei Kommunikationsteilnachrichten beziehungsweise auf mehr als zwei Antwortteilnachrichten aufgeteilt wird. Dann werden für das zuvor beschriebene Verfahren entsprechend mehr Steuerzyklen genutzt.

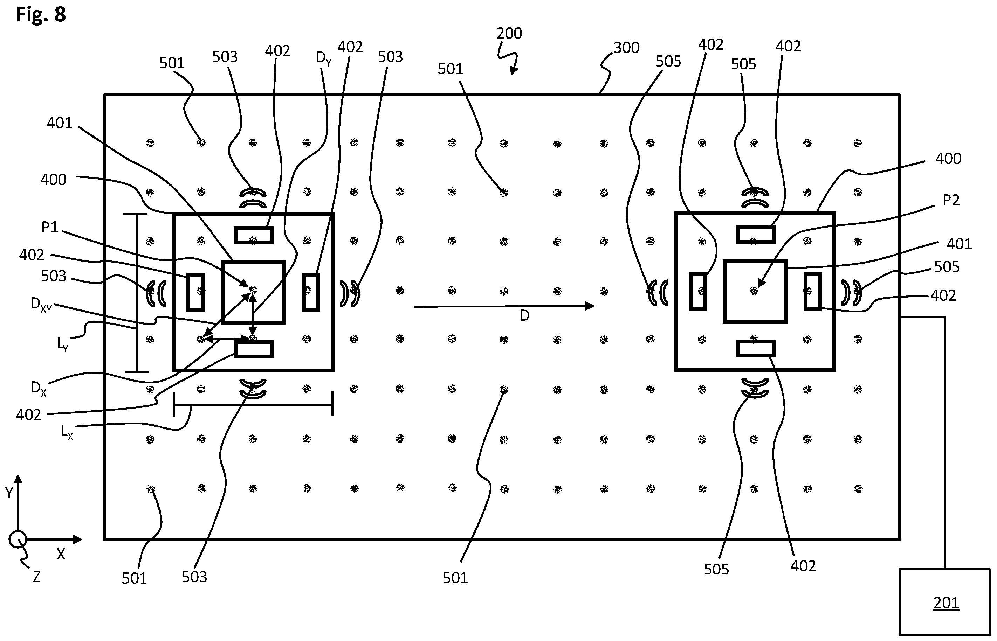

Fig. 8 zeigt eine schematische Darstellung des Verfahrens 100 zum Steuern eines Planarantriebssystems 200 gemäß der Ausführungsform in Fig. 7.

Fig. 8 zeigt eine Draufsicht einer Ausführungsform des Planarantriebssystems 200 aus Fig. 1. Das Planarantriebssystems 200 umfasst alle dort beschriebenen Merkmale. Von einer erneuten detaillierten Beschreibung wird daher im Folgenden abgesehen. Fig. 8 zeigt ferner eine Bewegung eines Läufers 400 in eine Fahrtrichtung D zwischen einer ersten Position P1 und einer zweiten Position P2.

Gemäß der Ausführungsform des Verfahrens 100 in Fig. 7 werden zur ersten Position P1 benachbarte erste Kommunikationseinheiten 503 ermittelt. Wie gezeigt ist, sind die ersten Kommunikationseinheiten 503 der Statoreinheit 300 dadurch gekennzeichnet, dass diese einen möglichst geringen Abstand zu den an den jeweils vier Kanten des quadratisch ausgebildeten Läufers 400 angeordneten Läuferkommunikationseinheiten 402 aufweisen. Die ersten Kommunikationseinheiten 503 können insbesondere darüber identifiziert werden, dass diese einen Abstand zur ersten Position P1 des Läufers 400 aufweisen, der geringer als ein vorbestimmter Grenzwert ist. Durch die Kenntnis der ersten Position P1 des Läufers 400, die wie gezeigt in Bezug auf ein geometrisches Zentrum des Läufers 400 definiert ist, und durch Kenntnis der Anordnung der einzelnen Läuferkommunikationseinheiten 402 am Läufer 400, können die ersten Kommunikationseinheiten 503 als die Kommunikationseinheiten 501 der Statoreinheit 300 mit dem geringsten Abstand zu einer der Läuferkommunikationseinheiten 402 des Läufers 400 ermittelt werden.

Eine Datenkommunikation zwischen der Hauptsteuereinheit 201 und der Untersteuereinheit 401 des Läufers 400 kann in der gezeigten Ausführungsform somit über die ermittelten ersten Kommunikationseinheiten 503 der Statoreinheit 300 und die entsprechenden Läuferkommunikationseinheiten 402 des Läufers 400 erfolgen. In der gezeigten Graphik ist ein Aussenden einer Antwortnachricht durch die Läuferkommunikationseinheiten 402 des Läufers 400 an die ermittelten ersten Kommunikationseinheiten 503 der Statoreinheit 300 dargestellt. Durch ein entsprechendes Auslesen der ersten Kommunikationseinheiten 503 der Statoreinheit 300 durch die Hauptsteuereinheit 201 kann die ausgesendete Antwortnachricht durch die Hauptsteuereinheit 201 empfangen werden. Gemäß der Ausführungsform in Fig. 7 kann die ausgesendete Antwortnachricht als eine erste Antwortteilnachricht ausgebildet sein und lediglich einen Teil der auszusendenden Antwortnachricht beschreiben, der während eines ersten Steuerzyklus ausgesendet werden kann.

In der gezeigten Ausführungsform sind die Kommunikationseinheiten 501 in der Statoreinheit 300 derart angeordnet, dass Abstände zwischen unmittelbar benachbarten Kommunikationseinheiten 501 kleiner sind als die Ausdehnungen des Läufers 400. Insbesondere ist ein entlang einer X-Achse verlaufender X-Abstand D_{X} kleiner als eine X-Breite L_{X} des Läufers 400 entlang der definierten X-Richtung. Analog ist ein Y-Abstand D_{Y} zweier unmittelbar benachbarter Kommunikationseinheiten 501 der Statoreinheit 300 entlang einer Y-Richtung kleiner als eine entsprechende Y-Breite L_{Y} des Läufers 400. Ein entlang einer XY-Richtung verlaufender XY-Abstand D_{XY} zweier unmittelbar benachbarter Kommunikationseinheiten 501 ist in der gezeigten Ausführungsform ebenfalls kleiner als die flächigen Ausmaße des quadratisch ausgebildeten Läufers 400.

Durch das Verfahren des Läufers 400 entlang der Fahrtrichtung D ist der Läufer 400 in einem zeitlich folgenden Steuerzyklus in einer von der ersten Position P1 unterschiedlichen zweiten Position P2 relativ zur Statoreinheit 300 positioniert. Gemäß der Ausführungsform in Fig. 7 werden entsprechende zweite Kommunikationseinheiten 505 ermittelt, die zur zweiten Position P2 des Läufers 400 benachbart sind. In der gezeigten Ausführungsform sind die zweiten Kommunikationseinheiten 505 wiederum dadurch gekennzeichnet, dass diese einen minimalen Abstand zu den jeweils an den vier Kanten des quadratisch ausgebildeten Läufers 400 angeordneten Läuferkommunikationseinheiten 402 des Läufers 400 aufweisen. Auch für die zweite Position P2 wird in Fig. 8 wiederum das Aussenden einer zweiten Antwortnachricht von den Läuferkommunikationseinheiten 402 des Läufers 400 an die ermittelten zweiten Kommunikationseinheiten 505 der Statoreinheit 300 dargestellt. Durch das Auslesen der entsprechenden zweiten Kommunikationseinheiten 505 kann die Hauptsteuereinheit 201 die ausgesendete zweite Antwortteilnachricht entsprechend empfangen.

In der gezeigten Ausführungsform ist eine Situation dargestellt, in der die ersten und zweiten Antwortteilnachrichten nicht in zwei unmittelbar aufeinanderfolgenden Steuerzyklen ausgesendet wurden. Vielmehr ist die Situation dargestellt, dass die beiden Steuerzyklen zeitlich durch eine Mehrzahl von weiteren ausgeführten Steuerzyklen zueinander beabstandet sind. Dies ist lediglich aus Gründen der Übersichtlichkeit der gezeigten Darstellung vorgenommen und soll die vorliegende Erfindung nicht einschränken. Bei zwei unmittelbar zeitlich aufeinanderfolgenden Steuerzyklen ist die Distanz zwischen den ersten und zweiten Positionen P1, P2 geringer und die ersten und zweiten Kommunikationseinheiten 503, 505 können wenigstens teilweise identisch sein.

In der gezeigten Darstellung ist das Aussenden der Antwortnachricht durch die Untersteuereinheit 401 des Läufers 400 dargestellt. Das Aussenden der Kommunikationsnachricht durch die Hauptsteuereinheit 201 erfolgt gemäß der Ausführungsform des Verfahrens 100 in Fig. 7 analog über die entsprechend ermittelten ersten und zweiten Kommunikationseinheiten 503, 505 in zwei zeitlich aufeinanderfolgenden Steuerzyklen.

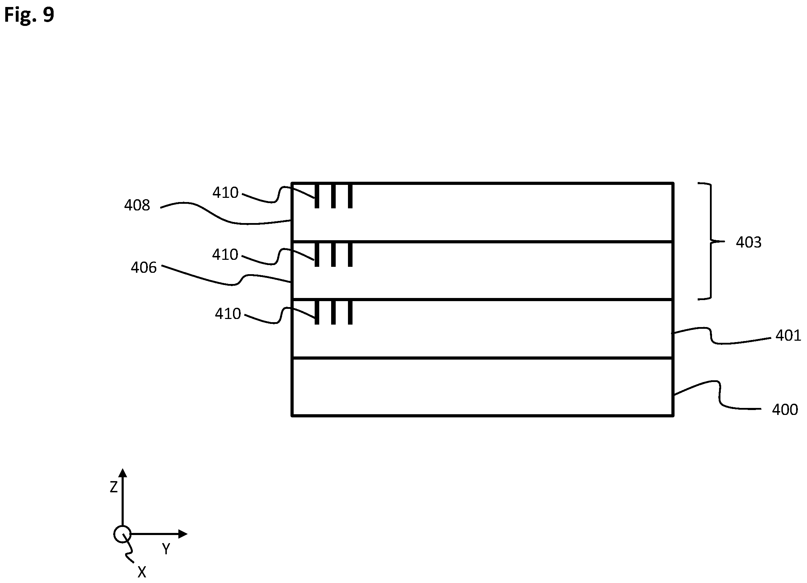

Fig. 9 zeigt eine schematische Darstellung eines Läufers 400 des Planarantriebssystems 200 gemäß einer Ausführungsform.

In der gezeigten Ausführungsform ist die Untersteuereinheit 401 flächig auf dem Läufer 400 ausgebildet. Die Prozessvorrichtung 403 zum Ausführen des Automatisierungsprozesses ist in der gezeigten Ausführungsform ebenfalls flächig ausgebildet und über der Untersteuereinheit 401 angeordnet. In der gezeigten Ausführungsform umfasst die Prozessvorrichtung 403 ein erstes Funktionsmodul 406 und ein zweites Funktionsmodul 408, die ebenfalls schichtweise übereinander angeordnet positioniert sind. Die beiden Funktionsmodule 406, 408 können verschiedene Funktionen des zu steuernden Automatisierungsprozesses ausführen. Alternativ kann die Prozessvorrichtung 403 eine beliebige Anzahl verschiedener Funktionsmodule umfassen. Die Untersteuereinheit 401 sowie die ersten und zweiten Funktionsmodule 406, 408 weisen jeweils Anschlusselemente 410 auf, mittels denen eine elektrische und datentechnische Verbindung zwischen der Untersteuereinheit 401 und der Prozessvorrichtung 403 ermöglicht ist.

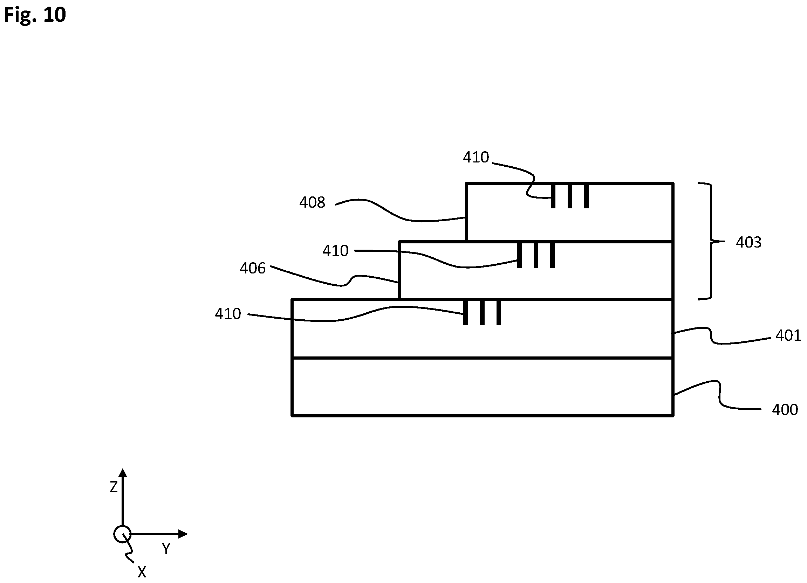

Fig. 10 zeigt eine weitere schematische Darstellung eines Läufers 400 des Planarantriebssystems 200 gemäß einer weiteren Ausführungsform.

Fig. 10 basiert auf der Ausführungsform des Läufers 400 in Fig. 9 und umfasst alle dort beschriebenen Merkmale. Von einer erneuten detaillierten Beschreibung wird daher im Folgenden abgesehen. Abweichend zu der Ausführungsform in Fig. 9 sind in der Ausführungsform in Fig. 10 die ersten und zweiten Funktionsmodule 406, 408 der Prozessvorrichtung 403 stufenförmig auf der flächig auf dem Läufer 400 ausgebildeten Untersteuereinheit 401 angeordnet.

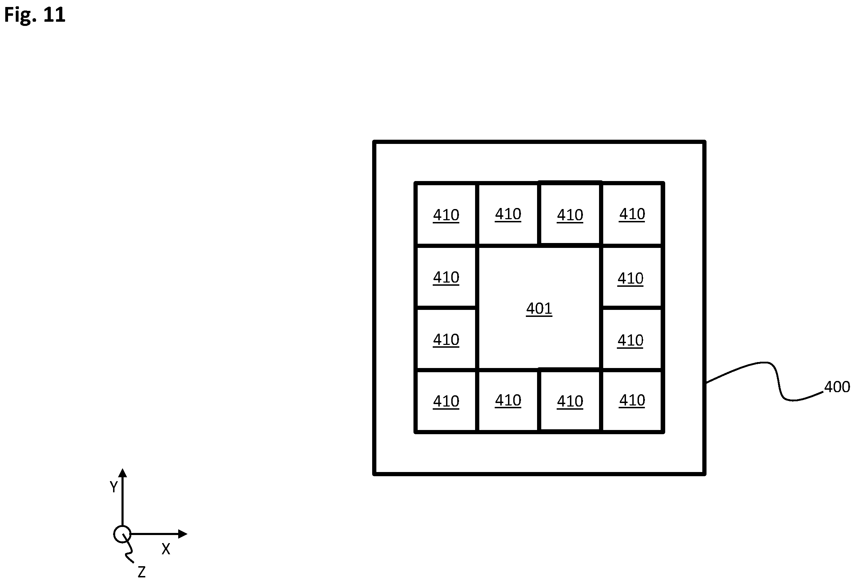

Fig. 11 zeigt eine weitere schematische Darstellung eines Läufers 400 des Planarantriebssystems 200 gemäß einer weiteren Ausführungsform.

Fig. 11 zeigt eine Draufsicht eines Läufers 400 mit einer flächig und insbesondere rechteckig ausgebildeten und im Zentrum des Läufers 400 auf dem Läufer 400 angeordneten Untersteuereinheit 401. In der gezeigten Ausführungsform sind um die rechteckig ausgebildete Untersteuereinheit 401 herum angeordnete Anschlusselemente 410 ausgebildet. Die Anschlusselemente sind an den vier Seiten der rechteckig ausgebildeten Untersteuereinheit 401 angeordnet. Die Anschlusselemente 410 können beispielsweise als I/O-Anschlusselemente ausgebildet sein, mittels denen ein Anschluss der Aktoreinheiten 405 bzw. Sensoreinheiten 407 der Prozessvorrichtung 403 ermöglicht ist.

Gemäß einer Ausführungsform sind die Untersteuereinheit 401 und/oder die Prozessvorrichtung 403 und/oder die I/O-Anschlusselemente der in den Fig. 9-11 dargestellten Ausführungsformen von einer Gehäuseeinheit umfasst. Die Gehäuseeinheit kann dabei derart ausgebildet sein, dass weitere Module, beispielsweise weitere Prozessvorrichtungen 403, in die Gehäuseeinheit einfügbar sind. Beispielsweise kann die Gehäuseeinheit Einschubausnehmungen aufweisen, in die entsprechende Module einschiebbar sind. Ferner kann die Gehäuseeinheit mit Kontaktierungselementen ausgebildet sein, sodass die verschiedenen Module über Kontaktierung mit den Kontaktierungselementen miteinander elektrisch und/oder datentechnisch verbindbar sind. Die Gehäuseeinheit kann ferner über eine Rückplatte mit dem Läufer verbunden sein.

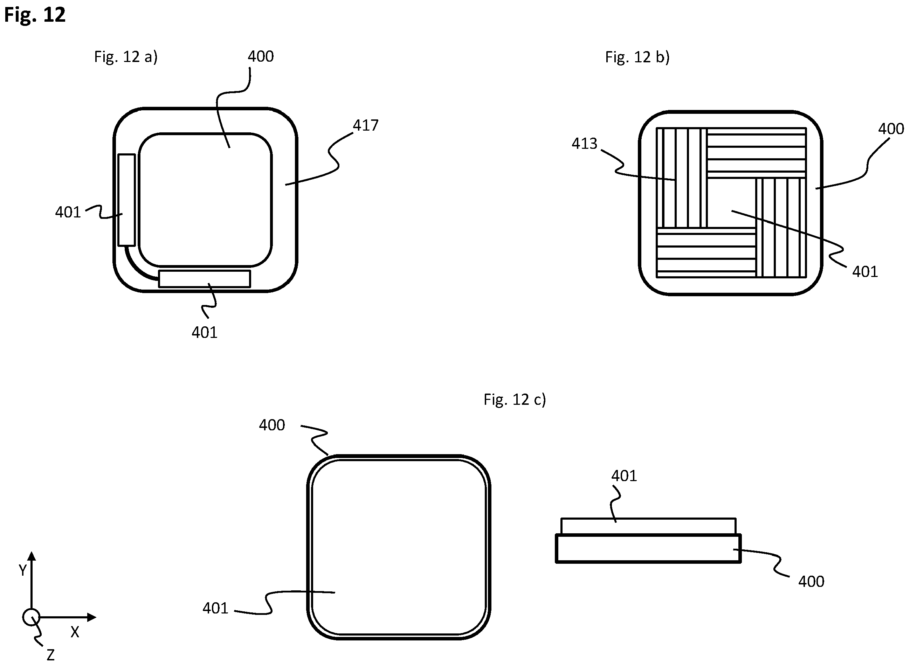

Fig. 12 zeigt schematische Darstellungen verschiedener Ausführungsformen einer Untersteuereinheit 401 eines Läufers 400.

Graphik a) zeigt eine Draufsicht eines Läufers 400 mit einer Untersteuereinheit 401. In der in Graphik a) gezeigten Ausführungsform ist die Untersteuereinheit 401 zweiteilig ausgebildet und an einem Randbereich des Läufers 400 angeordnet. Insbesondere ist die Untersteuereinheit 401 in einem an den Außenkanten des Läufers 400 ausgebildeten Stoßschutzelement 417 ausgebildet. Das Stoßschutzelement 417 dient als Stoßschutz für den Läufer 400 und verhindert Beschädigungen des Läufers 400 bei Kollisionen des Läufers 400 mit anderen Läufern 400 oder anderen Objekten. Die zweiteilige Untersteuereinheit 401 erstreckt sich in der gezeigten Ausführungsform über zwei Kanten des Läufers 400. Ebenso ist es denkbar, dass nur eine Untersteuereinheit 401 an einer Kante des Läufers 400 ausgebildet ist. Es ist aber auch denkbar, dass die Untersteuereinheit 401 in mehr als zwei Teile, insbesondere in vier Teile, aufgeteilt ist und an allen vier Kanten des Läufers 400 ein Teil der Untersteuereinheit 401 angeordnet ist. Hierdurch kann der Bauraumbedarf und die Gewichtsverteilung optimiert werden.

Graphik b) zeigt eine Unteransicht eines Läufers 400 mit einer Untersteuereinheit 401. In der in Graphik b) gezeigten Ausführungsform ist die Untersteuereinheit 401 mittig zwischen den vier Magneteinheiten 413 positioniert. Eine derartige Anordnung der Untersteuereinheit ist sehr platzsparend und optimal in Bezug auf die Gewichtsverteilung auf dem Läufer 400.

Graphik c) zeigt eine Draufsicht und eine Seitenansicht eines Läufers 400 mit einer Untersteuereinheit 401. In der in Graphik c) gezeigten Ausführungsform ist die Untersteuereinheit 401 als ein flächiges Schichtelement auf dem Läufer 400 ausgebildet. Die Untersteuereinheit 401 kann hierzu als eine Steuerplatine ausgebildet sein. Auf der flächig ausgebildeten Untersteuereinheit 401 können dann weitere Bauelemente, Anschlusselemente, Steuerelemente und/oder zu transportierend Objekte/Produkte platziert und so durch den Läufer 400 bewegt werden.

Gemäß einer Ausführungsform ist die Untersteuereinheit 401 als eine speicherprogrammierbare Steuerung SPS ausgebildet. Insbesondere kann die Untersteuereinheit 401 als ein Industrie-PC ausgebildet sein.

Gemäß einer Ausführungsform kann die Datenkommunikation zwischen der Hauptsteuereinheit 201 und der Untersteuereinheit 401 über ein Feldbusprotokoll bewirkt werden. Insbesondere kann das Feldbusprotokoll als ein EtherCAT-Protokoll gestaltet sein.

Ein Steuerzyklus der zyklischen Steuerung des Planarantriebssystems 200 kann einen Zeitraum im Mikrosekundenbereich beschreiben.

### Bezugszeichenliste

- 100: Verfahren
- 101: erster Ausgabeschritt
- 103: zweiter Ausgabeschritt
- 105: dritter Ausgabeschritt
- 107: vierter Ausgabeschritt
- 109: fünfter Ausgabeschritt
- 111: Übertragungsschritt

- 200: Planarantriebssystem
- 201: Steuereinheit
- 203: Datenverbindung

- 300: Statoreinheit
- 301: Statormodul
- 303: Statoroberfläche
- 305: Statormodulgehäuse
- 307: Anschlussleitung
- 308: Statorsegment
- 309: Statorleiter
- 311: Kontaktstruktur
- 313: Energieübertragungsstruktur
- 315: Basisstruktur
- 317: Übertragungseinheit
- 319: Statorbasis
- 321: Spalt
- 323: Stromschiene
- 325: Seitenbereich der Statoreinheit
- 327: Prozessvorrichtung
- 329: Schleifkontakt
- 331: Induktionsspule
- 333: Induktionsschicht
- 335: Stecker-/Buchsenelement
- 337: Kontaktierungselement
- 339: Düsenelement
- 341: Versorgungsleitung
- 343: Auslösestruktur
- 345: Aktivierungsvorsprung
- 347: Aufnahmebereich
- 349: Auslösebasisstruktur
- 351: Bodenbereich
- 353: Kontaktierungsarm
- 355: Stromschienenfolie
- 357: + Pol Kontaktierungselement
- 359: - Pol Kontaktierungselement

- 400: Läufer
- 401: Magnetanordnung
- 403: Freifläche
- 405: Befestigungsstruktur
- 407: Magneteinheit
- 409: Magnetelement
- 411: erste X-Magneteinheit
- 413: zweite X-Magneteinheit
- 415: erste Y-Magneteinheit
- 417: zweite Y-Magneteinheit
- 419: Energiespeicher
- 421: Energieübertragungselement
- 423: weiterer Läufer
- 425: Energieübertragungsgegenelement
- 427: Prozessvorrichtung
- 429: Übertragungsgegeneinheit
- 431: Energieübertragungsverbindung
- 433: Fixiermechanismus
- 435: Oberseite
- 437: Unterseite
- 439: Schleifkontakt
- 441: Gehäuse
- 443: Batterieeinheit
- 445: Seitenbereich des Läufers
- 447: Induktionsspule
- 449: Induktionsschicht
- 451: Stecker-/Buchsenelement
- 453: Zentrum
- 455: Umrandungsstruktur
- 457: Medientank
- 459: Einführelement
- 461: Oberseite des Energiespeichers
- 463: Seitenbereich des Energiespeichers
- 465: weiterer Energiespeicher
- 467: weitere Energieübertragungsverbindung
- 469: Ausgabeöffnung
- 471: Auslöseelement
- 473: Auswurfelement
- 475: Rastelement
- 477: Läuferbasis
- 479: Seitenbereich
- 481: Deckenbereich

- 500: Sensormodul
- 501: Magnetfeldsensor

- D: Abstand
- H: Flughöhe
- C: Zentrum

## Patentansprüche

1. Verfahren (100) zum Steuern eines Planarantriebssystems (200), wobei das Planarantriebssystem (200) eine Hauptsteuereinheit (201) zum Steuern des Planarantriebssystems (200), eine Statoreinheit (300) mit einer Mehrzahl von Statorspulen (321) zum Erzeugen eines Statormagnetfelds und wenigstens einen Läufer (400) mit einer Mehrzahl von Magneteinheiten (413) zum Erzeugen eines Läufermagnetfelds umfasst, wobei über eine magnetische Kopplung zwischen dem Statormagnetfeld und dem Läufermagnetfeld der Läufer (400) auf der Statoreinheit (300) antreibbar ist, wobei am Läufer (400) eine Untersteuereinheit (401) zum Steuern eines durch den Läufer (400) ausführbaren Automatisierungsprozesses ausgebildet ist, wobei das Planarantriebssystem (200) ferner ein Kommunikationssystem (500) für eine drahtlose Datenkommunikation zwischen der Hauptsteuereinheit (201) und der Untersteuereinheit (401) des Läufers (400) umfasst, **dadurch gekennzeichnet, dass** das Kommunikationssystem (500) eine Mehrzahl von gleichmäßig über die gesamte Statoreinheit (300) verteilt an der Statoreinheit (300) angeordneten Kommunikationseinheiten (501) und verteilt am Läufer (400) angeordneten Läuferkommunikationseinheiten (402) umfasst, und wobei das Verfahren (100) umfasst:
Aussenden einer Kommunikationsnachricht durch die Hauptsteuereinheit (201) an die Untersteuereinheit (401) über das Kommunikationssystem (500) in einem Sendeschritt (101), wobei die Kommunikationsnachricht einen Startbefehl zum Starten des durch den Läufer (400) auszuführenden Automatisierungsprozesses umfasst und eingerichtet ist, die Untersteuereinheit (401) zum Steuern des Automatisierungsprozesses anzutreiben, und wobei der durch die Hauptsteuereinheit (201) ausgeführte Sendeschritt (101) umfasst:
Ermitteln wenigstens einer zu einer Position des Läufers (400) an der Statoreinheit (300) benachbart angeordneten Kommunikationseinheit (501) in einem Ermittlungsschritt (105); und
Ansteuern der zur Position des Läufers (400) benachbarten Kommunikationseinheit (501) zum Aussenden der Kommunikationsnachricht in einem Ansteuerungsschritt (107); und
Empfangen einer durch die Untersteuereinheit (401) an die Hauptsteuereinheit (201) über das Kommunikationssystem (500) ausgesendeten Antwortnachricht in einem Empfangsschritt (103), wobei die Antwortnachricht eine Zustandsangabe über einen Zustand des durch die Untersteuereinheit (401) gesteuerten Automatisierungsprozesses umfasst.

2. Verfahren (100) nach Anspruch 1, wobei der durch die Hauptsteuereinheit (201) ausgeführte Empfangsschritt (103) umfasst:
Ermitteln wenigstens einer zur Position des Läufers (400) am Statormodul benachbart angeordneten Kommunikationseinheit (501) in einem weiteren Ermittlungsschritt (109); und
Auslesen der zur Position des Läufers (400) benachbarten Kommunikationseinheit (501) zum Empfangen der Antwortnachricht in einem Ausleseschritt (111).

3. Verfahren (100) nach Anspruch 1 oder 2, wobei die Datenkommunikation zwischen der Hauptsteuereinheit (201) und der Untersteuereinheit (401) während eines Antreibens des Läufers (400) von einer ersten Position (P1) zu einer zweiten Position (P2) auf der Statoreinheit (300) erfolgt, und wobei der durch die Hauptsteuereinheit (201) ausgeführte Sendeschritt (101) umfasst:
Ermitteln wenigstens einer zur ersten Position (P1) des Läufers (400) an der Statoreinheit (300) benachbart angeordneten ersten Kommunikationseinheit (503) in einem ersten Kommunikationseinheitsermittlungsschritt (113); und
Ansteuern der zur ersten Position (P1) des Läufers (400) benachbarten ersten Kommunikationseinheit (503) zum Aussenden einer ersten Kommunikationsteilnachricht in einem ersten Teilsendeschritt (115), wobei die erste Kommunikationsteilnachricht einen Teil der Kommunikationsnachricht darstellt; und
Ermitteln wenigstens einer zur zweiten Position (P2) des Läufers (400) an der Statoreinheit (300) benachbart angeordneten zweiten Kommunikationseinheit (505) in einem zweiten Kommunikationseinheitsermittlungsschritt (117); und
Ansteuern der zur zweiten Position (P2) des Läufers (400) benachbarten zweiten Kommunikationseinheit (505) zum Aussenden einer zweiten Kommunikationsteilnachricht in einem zweiten Teilsendeschritt (119), wobei die zweite Kommunikationsteilnachricht einen weiteren Teil der Kommunikationsnachricht darstellt;
und/oder wobei der durch die Hauptsteuereinheit (201) ausgeführte Empfangsschritt (103) umfasst:
Ermitteln wenigstens einer zur ersten Position (P1) des Läufers (400) an der Statoreinheit (300) benachbart angeordneten ersten Kommunikationseinheit (503) in einem weiteren ersten Kommunikationseinheitsermittlungsschritt (121); und
Auslesen der zur ersten Position (P1) des Läufers (400) benachbarten ersten Kommunikationseinheit (503) zum Empfangen einer ersten Antwortteilnachricht in einem ersten Teilausleseschritt (123), wobei die erste Antwortteilnachricht einen Teil der Antwortnachricht darstellt; und
Ermitteln wenigstens einer zur zweiten Position (P2) des Läufers (400) an der Statoreinheit (300) benachbart angeordneten zweiten Kommunikationseinheit (505) in einem weiteren zweiten Kommunikationseinheitsermittlungsschritt (125); und
Auslesen der zur zweiten Position (P2) des Läufers (400) benachbarten zweiten Kommunikationseinheit (505) zum Empfangen einer zweiten Antwortteilnachricht in einem zweiten Teilausleseschritt (127), wobei die zweite Antwortteilnachricht einen weiteren Teil der Antwortnachricht darstellt.

4. Verfahren (100) nach Anspruch 2 oder 3, wobei die seitens der Hauptsteuereinheit (201) über die Kommunikationseinheit (501) empfangene Antwortnachricht oder Antwortteilnachricht basierend auf einer Position der Kommunikationseinheit (501) an der Statoreinheit (300) über die die Antwortnachricht oder Antwortteilnachricht empfangen wurde und der Position des Läufers (400) beim Aussenden der Antwortnachricht oder Antwortteilnachricht seitens der Untersteuereinheit (401) beziehungsweise beim Empfangen der Antwortnachricht oder Antwortteilnachricht seitens der Hauptsteuereinheit (201) der Untersteuereinheit (401) des Läufers (400) zugeordnet wird.

5. Verfahren (100) nach einem der voranstehenden Ansprüche, wobei die Zustandsangabe der seitens der Hauptsteuereinheit (401) empfangenen Antwortnachricht eine Startinformation, dass der Automatisierungsprozess gestartet wurde, und/oder eine Stoppinformation, dass der Automatisierungsprozess gestoppt wurde, und/oder Prozessdaten des abgeschlossenen Automatisierungsprozesses und/oder Prozessdaten als Teilergebnisinformation des laufenden Automatisierungsprozesses und/oder eine Fehlermeldung bezüglich einer fehlerhaften Ausführung des Automatisierungsprozesses umfasst.

6. Verfahren (100) nach einem der voranstehenden Ansprüche, wobei die Hauptsteuereinheit (201) und die Untersteuereinheit (401) jeweils ein Uhrenelement umfassen, und wobei die Kommunikationsnachricht einen Zeitstempel zum Synchronisieren der Uhrenelemente der Hauptsteuereinheit (201) und der Untersteuereinheit (401) umfasst.

7. Verfahren (100) nach Anspruch 6, wobei die Kommunikationsnachricht einen Startzeitpunkt zum Starten der Ausführung des Automatisierungsprozesses durch die Untersteuereinheit (401) umfasst.

8. Läufer (400) für ein Planarantriebssystem (200) mit einer Statoreinheit (300) zum Erzeugen eines Statormagnetfelds zum Antreiben des Läufers (400) über eine magnetische Kopplung mit einem Läufermagnetfeld des Läufers (400), wobei der Läufer (400) eine Mehrzahl von Magneteinheiten (413) zum Erzeugen des Läufermagnetfelds, eine Untersteuereinheit (401) zum Steuern eines Automatisierungsprozesses, eine Prozessvorrichtung (403) mit wenigstens einer Aktoreinheit (405) und/oder einer Sensoreinheit (407) zum Ausführen des Automatisierungsprozesses umfasst, **dadurch gekennzeichnet, dass** der Läufer (400) eine Mehrzahl von verteilt am Läufer (400) ausgebildeten Läuferkommunikationseinheiten (402) zum Ausführen einer Datenkommunikation zwischen der Untersteuereinheit (401) des Läufers (400) und einer Hauptsteuereinheit (201) des Planarantriebssystems (200) umfasst.

9. Statoreinheit (300) für ein Planarantriebssystem (200) mit wenigstens einem Läufer (400), wobei die Statoreinheit (300) eine Mehrzahl von Statorspulen zum Erzeugen eines Statormagnetfelds zum Antreiben des Läufers (400) über eine magnetische Kopplung mit einem Läufermagnetfeld des Läufers (400) umfasst, **dadurch gekennzeichnet, dass** die Statoreinheit (300) eine Mehrzahl von gleichmäßig über die gesamte Statoreinheit (300) verteilt an der Statoreinheit (300) ausgebildeten Kommunikationseinheiten (501) zur drahtlosen Datenkommunikation zwischen einer Hauptsteuereinheit (201) des Planarantriebssystems (200) und einer am Läufer (400) ausgebildeten Untersteuereinheit (401) umfasst, und wobei die Kommunikationseinheiten (501) in einer Anordnung an der Statoreinheit (300) angeordnet sind.

10. Statoreinheit (300) nach Anspruch 9, wobei ein maximaler Abstand zwischen zwei benachbarten Kommunikationseinheiten (501) an der Statoreinheit (300) der Anordnung kleiner oder gleich einer zweifachen maximalen Kommunikationsreichweite der Kommunikationseinheit (501) ist.

11. Statoreinheit (300) nach einem der voranstehenden Ansprüche 9 bis 10, wobei die Kommunikationseinheiten (501) Sende-/Empfangseinheiten einer Nahfeldkommunikation und/oder einer Bluetooth-Kommunikation und/oder einer ZigBee-Kommunikation und/oder einer Z-Wave-Kommunikation umfassen.

12. Statoreinheit (300) nach einem der voranstehenden Ansprüche 9 bis 11, wobei die Kommunikationseinheiten (501) in einer Kommunikationsfolie (507) ausgebildet sind, und wobei die Kommunikationsfolie (507) auf einer Statoroberfläche der Statoreinheit (300) ausgebildet ist.

13. Statoreinheit (300) nach einem der voranstehenden Ansprüche 9 bis 12, wobei die Kommunikationseinheiten (501) in die Statoreinheit (300) integriert sind.

14. Planarantriebssystem (200) mit einer Hauptsteuereinheit (201) zum Steuern des Planarantriebssystems (200), einem Läufer (400) nach Anspruch 8 und einer Statoreinheit (300) nach einem der voranstehenden Ansprüche 9 bis 13, wobei das Planarantriebssystem (200) eingerichtet ist, das Verfahren (100) nach einem der voranstehenden Ansprüche 1 bis 7 auszuführen und einem Kommunikationssystem (500).

15. Planarantriebssystem (200) nach Anspruch 14, wobei das Kommunikationssystem (500) wenigstens eine externe Kommunikationseinheit (501) umfasst, und wobei die externe Kommunikationseinheit (501) zur Statoreinheit (300) beabstandet angeordnet ist, und/oder wobei ein maximaler Abstand zwischen zwei benachbarten Kommunikationseinheiten (501) an der Statoreinheit (300) geringer oder gleich einer minimalen flächigen Ausdehnung eines Läufers (400) eines Planarantriebssystems (200) ist, und/oder wobei die Statorspulen durch eine zyklische Ansteuerung seitens der Hauptsteuereinheit (201) eingerichtet sind, den Läufer (400) mit einer maximalen Geschwindigkeit über eine innerhalb eines Steuerzyklus maximal zurücklegbare Strecke anzutreiben, und wobei die in einem Steuerzyklus durch den Läufer (400) maximal zurücklegbare Strecke geringer oder gleich einer Kommunikationsreichweite der Kommunikationseinheiten (501) und/oder geringer oder gleich einem maximalen Abstand zwischen zwei benachbarten Kommunikationseinheiten (501) ist.

## Claims

1. A method (100) for controlling a planar drive system (200), wherein the planar drive system (200) comprises a main controller (201) for controlling the planar drive system (200), a stator assembly (300) having a plurality of stator coils (321) for generating a stator magnetic field and at least one rotor (400) having a plurality of magnet assemblies (413) for generating a rotor magnetic field, wherein the rotor (400) may be driven on the stator assembly (300) via a magnetic coupling between the stator magnetic field and the rotor magnetic field, wherein a sub-controller (401) is embodied on the rotor (400) for controlling an automation process which may be executed by the rotor (400), wherein the planar drive system (200) further comprises a communication system (500) for wireless data communication between the main controller (201) and the sub-controller (401) of the rotor (400), **characterized in that** the communication system (500) comprises a plurality of communication units (501) arranged over the entire the stator assembly (300) in a distributed manner and rotor communication units (402) arranged on the rotor (400) in a distributed manner, and wherein the method (100) comprises:
transmitting a communication message with the aid of the main controller (201) to the sub-controller (401) via the communication system (500) in a transmitting step (101), wherein the communication message comprises a start command for starting the automation process to be carried out by the rotor (400) and is set up to drive the sub-controller (401) to control the automation process; and wherein the transmitting step (101) carried out by the main controller (201) comprises:
determining at least one communication unit (501) arranged adjacent to a position of the rotor (400) on the stator assembly (300) in a determining step (105); and
actuating the communication unit (501) adjacent to the position of the rotor (400) for transmitting the communication message in an actuating step (107); and
receiving a response message transmitted by the sub-controller (401) to the main controller (201) via the communication system (500) in a receiving step (103), the response message comprising a status indication of a status of the automation process controlled by the sub-controller (401).

2. The method (100) according to claim 1, wherein the receiving step (103) carried out by the main controller (201) comprises:
determining at least one communication unit (501) arranged adjacent to the position of the rotor (400) on the stator module in a further determining step (109); and
reading out the communication unit (501) adjacent to the position of the rotor (400) for receiving the response message in a reading-out step (111).

3. The method (100) according to claim 1 or 2, wherein the data communication between the main controller (201) and the sub-controller (401) takes place during a driving of the rotor (400) from a first position (P1) to a second position (P2) on the stator assembly (300), and wherein the transmitting step (101) carried out by the main controller (201) comprises:
determining at least one first communication unit (503) arranged adjacent to the first position (P1) of the rotor (400) on the stator assembly (300) in a first communication unit determining step (113); and
driving the first communication unit (503) adjacent to the first position (P1) of the rotor (400) to transmit a first communication partial message in a first partial transmitting step (115), wherein the first communication partial message represents a part of the communication message; and
determining at least one second communication unit (505) arranged adjacent to the second position (P2) of the rotor (400) on the stator assembly (300) in a second communication unit determining step (117); and
driving the second communication unit (505) adjacent to the second position (P2) of the rotor (400) to transmit a second communication partial message in a second partial transmitting step (119), wherein the second communication partial message represents a further part of the communication message;
and/or wherein the receiving step (103) performed by the main controller (201) comprises:
determining at least one first communication unit (503) arranged adjacent to the first position (P1) of the rotor (400) on the stator assembly (300) in a further first communication unit determining step (121); and
reading out the first communication unit (503) adjacent to the first position (P1) of the rotor (400) to receive a first response partial message in a first partial reading-out step (123), the first response partial message representing a part of the response message; and
determining at least one second communication unit (505) arranged adjacent to the second position (P2) of the rotor (400) on the stator assembly (300) in a further second communication unit determining step (125); and
reading out the second communication unit (505) adjacent to the second position (P2) of the rotor (400) for receiving a second partial response message in a second partial reading-out step (127), wherein the second partial response message represents a further part of the response message.

4. The method (100) according to claim 2 or 3, wherein the response message or partial response message received by the main controller (201) via the communication unit (501) is assigned to the sub-controller (401) of the rotor (400) based on a position of the communication unit (501) on the stator assembly (300) via which the response message or partial response message was received and the position of the rotor (400) when the sub-controller (401) transmits the response message or partial response message or when the main controller (201) receives the response message or partial response message.

5. The method (100) according to any one of the preceding claims, wherein the status information of the response message received by the main controller (401) comprises start information that the automation process has been started, and/or stop information that the automation process has been stopped, and/or process data of the completed automation process, and/or process data as partial result information of the running automation process, and/or an error message regarding an incorrect execution of the automation process.

6. The method (100) according to any one of the preceding claims, wherein the main controller (201) and the sub-controller (401) each comprise a clock element, and wherein the communication message comprises a time stamp for synchronizing the clock elements of the main controller (201) and the sub-controller (401).

7. The method (100) according to claim 6, wherein the communication message comprises a start time for starting the execution of the automation process by the sub-controller (401).

8. A rotor (400) for a planar drive system (200) comprising a stator assembly (300) for generating a stator magnetic field for driving the rotor (400) via magnetic coupling with a rotor magnetic field of the rotor (400), the rotor (400) comprising a plurality of magnet assemblies (413) for generating the rotor magnetic field, a sub-controller (401) for controlling an automation process, a processing device (403) with at least one actuator unit (405) and/or a sensor unit (407) for carrying out the automation process, **characterized in that** the rotor (400) comprises a plurality of rotor communication units (402) embodied at the rotor (400) in a distributed manner for carrying out a data communication between the sub-controller (401) of the rotor (400) and a main controller (201) of the planar drive system (200).

9. A stator assembly (300) for a planar drive system (200) with at least one rotor (400), wherein the stator assembly (300) comprises a plurality of stator coils for generating a stator magnetic field for driving the rotor (400) via a magnetic coupling with a rotor magnetic field of the rotor (400), **characterized in that** the stator assembly (300) comprises a plurality of communication units (501) arranged over the entire stator assembly (300) in a distributed manner at the stator assembly (300) for wireless data communication between a main controller (201) of the planar drive system (200) and a sub-controller (401) embodied on the rotor (400), and wherein the communication units (501) are arranged in an arrangement on the stator assembly (300).

10. The stator assembly (300) according to claim 9, wherein a maximum distance between two adjacent communication units (501) on the stator assembly (300) of the arrangement is less than or equal to twice a maximum communication range of the communication unit (501).

11. The stator assembly (300) according to any one of the preceding claims 9 to 10, wherein the communication units (501) comprise transmitting/receiving units of a near field communication and/or a Bluetooth communication and/or a ZigBee communication and/or a Z-Wave communication.

12. The stator assembly (300) according to any one of the preceding claims 9 to 11, wherein the communication units (501) are embodied in a communication foil (507), and wherein the communication foil (507) is embodied on a stator surface of the stator assembly (300).

13. The stator assembly (300) according to any one of the preceding claims 9 to 12, wherein the communication units (501) are integrated into the stator assembly (300).

14. A planar drive system (200) comprising a main controller (201) for controlling the planar drive system (200), a rotor (400) according to claim 8 and a stator assembly (300) according to any one of the preceding claim 9 to 13, wherein the planar drive system (200) is set up to carry out the method (100) according to any one of the preceding claims 1 to 7 and a communication system (500).

15. The planar drive system (200) according to claim 14, wherein the communication system (500) comprises at least one external communication unit (501), and wherein the external communication unit (501) is arranged at a distance from the stator assembly (300), und/oder . wherein a maximum distance between two adjacent communication units (501) at the stator assembly (300) is less than or equal to a minimal planar extension of a rotor (400) of a planar drive system (200) and/or wherein the stator coils, with the aid of a cyclic actuation from the main controller (201), are set up to drive the rotor (400) at a maximum speed over a maximum distance that can be covered within a control cycle, and wherein the maximum distance that can be covered by the rotor (400) in a control cycle is less than or equal to a communication range of the communication units (501) and/or less than or equal to a maximum distance between two adjacent communication units (501).

## Revendications

1. Procédé (100) pour commander un système d'entraînement planaire (200), le système d'entraînement planaire (200) comprenant une unité de commande principale (201) pour commander le système d'entraînement planaire (200), une unité de stator (300) comportant une pluralité de bobines de stator (321) pour générer un champ magnétique de stator et au moins un rotor (400) doté d'une pluralité d'unités magnétiques (413) pour générer un champ magnétique de rotor, le rotor (400) pouvant être entraîné sur l'unité de stator (300) par un couplage magnétique entre le champ magnétique de stator et le champ magnétique de rotor, une unité de commande secondaire (401) étant formée sur le rotor (400) pour commander un processus d'automatisation exécutable par le rotor (400), le système d'entraînement planaire (200) comprenant en outre un système de communication (500) pour une communication de données sans fil entre l'unité de commande principale (201) et l'unité de commande secondaire (401) du rotor (400), **caractérisé en ce que** le système de communication (500) comprend une pluralité d'unités de communication (501) agencées sur l'unité de stator (300) et uniformément réparties sur la totalité de l'unité de stator (300) et des unités de communication de rotor (402) agencées de manière répartie sur le rotor (400), et le procédé (100) comprenant :
l'envoi d'un message de communication par l'unité de commande principale (201) à l'unité de commande secondaire (401) par l'intermédiaire du système de communication (500) lors d'une étape d'émission (101), le message de communication comprenant une instruction de démarrage pour démarrer le processus d'automatisation à exécuter par le rotor (400) et étant conçu pour entraîner l'unité de commande secondaire (401) afin de commander le processus d'automatisation, et l'étape d'émission (101) exécutée par l'unité de commande principale (201) comprenant :
la détermination d'au moins une unité de communication (501) agencée à proximité d'une position du rotor (400) sur l'unité de stator (300) lors d'une étape de détermination (105) ; et
l'attaque de l'unité de communication (501) à proximité de la position du rotor (400) pour émettre le message de communication lors d'une étape de commande (107) ; et
la réception d'un message de réponse envoyé par l'unité de commande secondaire (401) à l'unité de commande principale (201) par l'intermédiaire du système de communication (500) lors d'une étape de réception (103), le message de réponse comprenant une indication d'état concernant un état du processus d'automatisation commandé par l'unité de commande secondaire (401).

2. Procédé (100) selon la revendication 1, dans lequel l'étape de réception (103) exécutée par l'unité de commande principale (201) comprend :
la détermination d'au moins une unité de communication (501) agencée à proximité de la position du rotor (400) sur le module de stator lors d'une autre étape de détermination (109) ; et
la lecture de l'unité de communication (501) à proximité de la position du rotor (400) pour recevoir le message de réponse lors d'une étape de lecture (111).

3. Procédé (100) selon la revendication 1 ou 2, dans lequel la communication de données entre l'unité de commande principale (201) et l'unité de commande secondaire (401) a lieu pendant un entraînement du rotor (400) d'une première position (P1) à une seconde position (P2) sur l'unité de stator (300), et dans lequel l'étape d'émission (101) exécutée par l'unité de commande principale (201) comprend :
la détermination d'au moins une première unité de communication (503) agencée à proximité de la première position (P1) du rotor (400) sur l'unité de stator (300) lors d'une première étape de détermination d'unité de communication (113) ; et
l'attaque de la première unité de communication (503) située à proximité de la première position (P1) du rotor (400) pour émettre un premier sous-message de communication lors d'une première sous-étape d'émission (115), le premier sous-message de communication représentant une partie du message de communication ; et
la détermination d'au moins une seconde unité de communication (505) agencée à proximité de la seconde position (P2) du rotor (400) sur l'unité de stator (300) lors d'une seconde étape de détermination d'unité de communication (117) ; et
l'attaque de la seconde unité de communication (505) située à proximité de la seconde position (P2) du rotor (400) pour émettre un second sous-message de communication lors d'une seconde sous-étape d'émission (119), le second sous-message de communication représentant une autre partie du message de communication ;
et/ou dans lequel l'étape de réception (103) exécutée par l'unité de commande principale (201) comprend :
la détermination d'au moins une première unité de communication (503) agencée à proximité de la première position (P1) du rotor (400) sur l'unité de stator (300) lors d'une autre première étape de détermination d'unité de communication (121) ; et
la lecture de la première unité de communication (503) à proximité de la première position (P1) du rotor (400) pour recevoir un premier sous-message de réponse lors d'une première sous-étape de lecture (123), le premier sous-message de réponse représentant une partie du message de réponse ; et
la détermination d'au moins une seconde unité de communication (505) agencée à proximité de la seconde position (P2) du rotor (400) sur l'unité de stator (300) lors d'une autre seconde étape de détermination d'unité de communication (125) ; et
la lecture de la seconde unité de communication (505) située à proximité de la seconde position (P2) du rotor (400) pour recevoir un second sous-message de réponse lors d'une seconde sous-étape de lecture (127), le second sous-message de réponse représentant une autre partie du message de réponse.

4. Procédé (100) selon la revendication 2 ou 3, dans lequel le message de réponse ou le sous-message de réponse reçu du côté de l'unité de commande principale (201) par l'intermédiaire de l'unité de communication (501) est attribué à l'unité de commande secondaire (401) du rotor (400) sur la base d'une position de l'unité de communication (501) sur l'unité de stator (300) par l'intermédiaire de laquelle le message de réponse ou le sous-message de réponse a été reçu et de la position du rotor (400) lors de l'émission du message de réponse ou du sous-message de réponse du côté de l'unité de commande secondaire (401) ou lors de la réception du message de réponse ou du sous-message de réponse du côté de l'unité de commande principale (201).

5. Procédé (100) selon l'une quelconque des revendications précédentes, dans lequel l'indication d'état du message de réponse reçu du côté de l'unité de commande principale (401) comprend une information de démarrage indiquant que le processus d'automatisation a démarré, et/ou une information d'arrêt indiquant que le processus d'automatisation a été arrêté, et/ou des données de processus du processus d'automatisation terminé, et/ou des données de processus en tant qu'information de résultat partiel du processus d'automatisation en cours, et/ou un message d'erreur concernant une exécution défectueuse du processus d'automatisation.

6. Procédé (100) selon l'une quelconque des revendications précédentes, dans lequel l'unité de commande principale (201) et l'unité de commande secondaire (401) comprennent respectivement un élément d'horloge, et dans lequel le message de communication comprend un horodatage permettant de synchroniser les éléments d'horloge de l'unité de commande principale (201) et de l'unité de commande secondaire (401).

7. Procédé (100) selon la revendication 6, dans lequel le message de communication comprend un point de départ temporel pour démarrer l'exécution du processus d'automatisation par l'unité de commande secondaire (401).

8. Rotor (400) destiné à un système d'entraînement planaire (200) comprenant une unité de stator (300) pour générer un champ magnétique de stator afin d'entraîner le rotor (400) par un couplage magnétique avec un champ magnétique de rotor du rotor (400), le rotor (400) comprenant une pluralité d'unités magnétiques (413) pour générer le champ magnétique de rotor, une unité de commande secondaire (401) pour commander un processus d'automatisation, un dispositif de processus (403) comprenant au moins une unité d'actionneur (405) et/ou une unité de capteur (407) pour exécuter le processus d'automatisation, **caractérisé en ce que** le rotor (400) comprend une pluralité d'unités de communication de rotor (402) réparties sur le rotor (400) pour effectuer une communication de données entre l'unité de commande secondaire (401) du rotor (400) et une unité de commande principale (201) du système d'entraînement planaire (200).

9. Unité de stator (300) destinée à un système d'entraînement planaire (200) comprenant au moins un rotor (400), l'unité de stator (300) comprenant une pluralité de bobines de stator pour générer un champ magnétique de stator afin d'entraîner le rotor (400) par un couplage magnétique avec un champ magnétique de rotor du rotor (400), **caractérisé en ce que** l'unité de stator (300) comprend une pluralité d'unités de communication (501) uniformément réparties sur la totalité de l'unité de stator (300) et agencées sur l'unité de stator (300) pour une communication de données sans fil entre une unité de commande principale (201) du système d'entraînement planaire (200) et une unité de commande secondaire (401) réalisée sur le rotor (400), et dans lequel les unités de communication (501) sont agencées selon une certaine configuration sur l'unité de stator (300).

10. Unité de stator (300) selon la revendication 9, dans laquelle une distance maximale entre deux unités de communication (501) voisines sur l'unité de stator (300) de ladite configuration est inférieure ou égale à deux fois la portée de communication maximale de l'unité de communication (501).

11. Unité de stator (300) selon l'une quelconque des revendications 9 à 10, dans laquelle les unités de communication (501) comprennent des unités d'émission/réception de communication en champ proche et/ou de communication Bluetooth et/ou de communication ZigBee et/ou de communication Z-Wave.

12. Unité de stator (300) selon l'une quelconque des revendications 9 à 11, dans laquelle les unités de communication (501) sont réalisées dans un film de communication (507), et dans laquelle le film de communication (507) est réalisé sur une surface de stator de l'unité de stator (300).

13. Unité de stator (300) selon l'une quelconque des revendications 9 à 12, dans laquelle les unités de communication (501) sont intégrées dans l'unité de stator (300).

14. Système d'entraînement planaire (200) comprenant une unité de commande principale (201) pour commander le système d'entraînement planaire (200), un rotor (400) selon la revendication 8 et une unité de stator (300) selon l'une quelconque des revendications 9 à 13, le système d'entraînement planaire (200) étant conçu pour mettre en œuvre le procédé (100) selon l'une quelconque des revendications 1 à 7, et un système de communication (500).

15. Système d'entraînement planaire (200) selon la revendication 14, dans lequel le système de communication (500) comprend au moins une unité de communication externe (501), et dans lequel l'unité de communication externe (501) est agencée à distance de l'unité de stator (300), et/ou dans lequel une distance maximale entre deux unités de communication (501) adjacentes sur l'unité de stator (300) est inférieure ou égale à une extension de surface minimale d'un rotor (400) d'un système d'entraînement planaire (200), et/ou dans lequel les bobines de stator sont conçues pour entraîner le rotor (400), par une commande cyclique de l'unité de commande principale (201), à une vitesse maximale sur une distance maximale pouvant être parcourue au sein d'un cycle de commande, et dans lequel la distance maximale pouvant être parcourue par le rotor (400) lors d'un cycle de commande est inférieure ou égale à une portée de communication des unités de communication (501) et/ou inférieure ou égale à une distance maximale entre deux unités de communication (501) adjacentes.
